# EUROPÄISCHE PATENTSCHRIFT

(11) **EP 1 710 275 B1**
(45) Veröffentlichungstag und Bekanntmachung des Hinweises auf die Patenterteilung: **18.01.2012**
(21) Anmeldenummer: 06007015.8
(22) Anmeldetag: 01.04.2006
(51) Int. Cl.: C08K 13/02

(54) **Stabilisiertes Flammschutzmittel**
Stabilized fire retardant
Agent d'ignifugation stabilisé

(30) Priorität: 08.04.2005 DE 102005016195
(43) Veröffentlichungstag der Anmeldung: 11.10.2006
(73) Patentinhaber: Clariant Produkte (Deutschland) GmbH, 65929 Frankfurt am Main (DE)
(72) Erfinder: Bauer, Harald, Dr., 50170 Kerpen (DE); Eisenträger, Frank, Dr., 50676 Köln (DE); Hörold, Sebastian, Dr., 86420 Diedorf (DE); Krause, Werner, Dr., 50354 Hürth (DE)
(74) Vertreter: Mikulecky, Klaus

(56) Entgegenhaltungen:
- EP-A- 1 479 718
- EP-A- 1 544 206
- FR-A- 2 843 592
- DATABASE WPI Section Ch, Week 200221 Derwent Publications Ltd., London, GB; Class A23, AN 2002-158226 XP002393492 & JP 2001 279091 A (ASAHI KASEI KOGYO KK) 10. Oktober 2001 (2001-10-10)

## Beschreibung

Die Erfindung betrifft ein stabilisiertes Flammschutzmittel und seine Verwendung in flammgeschützten Polymerformmassen und flammgeschützten Polymer-Formkörpern.

Die WO 00/02869 beschreibt Polyphosphatsalze von 1,3,5-Triazinverbindungen, die dadurch charakterisiert sind, dass deren durchschnittlicher Kondensationsgrad n höher als 20 und der Melamingehalt höher als 1,1 mol Melamin je mol Phosphor ist. Außerdem sollen diese Melaminpolyphosphate als Slurry (Aufschlämmung) von 10 Gew.-% Konzentration in Wasser einen pH-Wert von größer oder gleich 5 aufweisen. Auch wird die Anwendung der Melaminpolyphosphate in glasfaserverstärkten Polyamid-6.6 Formmassen und Formkörpern beschrieben.

Die WO 96/09344 beschreibt die Verwendung von Melamin- oder Melem-Phosphorsäure-Umsetzungsprodukten als Flammhemmer in glasfaserverstärkten Polyamidformmassen. Als Koflammhemmer werden Zinkborat, Zinkphosphat etc. eingesetzt.

An Flammschutzmitteln auf Basis der Polyphosphatsalze von 1,3,5-TriazinVerbindungen beziehungsweise Melamin- oder Melem-Phosphorsäure-Umsetzungsprodukten, die im Folgenden auch als Melaminpolyphosphate (MPP) bezeichnet werden, ist nachteilig, dass sie Mängel bei der Verträglichkeit mit Polymeren haben. Besonders ausgeprägt ist dies bei Polyamiden.

Die EP-A-1 544 206 beschreibt Dialkylphosphinsäuren und ihre Salze, welche mit weiteren ausgewählten Komponenten als Flammschutzmittel in thermoplastischen Polymeren eingesetzt werden. Besonders geeignet ist nach diesem Stand der Technik eine Kombination aus Aluminiumtrisdiethylphosphinat, Melaminpolyphosphat, Zinkoxid und Glasfasern in Polyamid 6.6.

In der EP-A-1 479 718 werden titanhaltige Flammschutzmittelzusammensetzungen beschrieben, die aus titanhaltigen Phosphinaten, Melaminpolyphosphat, speziell ausgewählten Zinkverbindungen und ggf. anderen Additiven bestehen.

Die FR-A-2 843 592 beschreibt Polyamidmassen, die als flammhemmende Substanzen Phosphinsäuresalze und Melaminpolyphosphat enthalten.

In der DATABASE WPI Section Ch, Week 200221 Derwent Publications Ltd., London, GB; Class A23, AN 2002-158226 XP002393492 & JP 2001 279091 A (ASAHI KASEI KOGYO KK) vom 10. Oktober 2001, werden Polyamidmassen beschrieben, die Melaminpolyphosphat und Al(OH)₃ bzw. Zn(OH)₂ als Flammschutzmittel enthalten.

Die mangelnde Verträglichkeit äußert sich in einer Verringerung der Viskosität der Polymerschmelze, die das Flammschutzmittel enthält, bei höherer Temperatur.

Solche Bedingungen werden zum Beispiel beim Spritzgießen von Formkörpern angetroffen. Als Resultat der Verringerung der Viskosität fließt Polymerschmelze aus der Spritzdüse der Spritzgussmaschine aus. Es lässt sich sowohl die Zeit bestimmen, nach der dieser Effekt eintritt (Ausflusszeit) als auch die austretende Schmelzemenge (Ausflussmenge).

Außer diesen verarbeitungstechnischen Nachteilen werden die mechanischen (Festigkeits-)Werte der resultierenden Polymerformkörper (E-Modul, Zugfestigkeit, Reißdehnung, Schlagzähigkeit, Kerbschlagzähigkeit) durch die mangelnde Verträglichkeit bleibend verschlechtert.

Die Schädigung des Polymers ist weiterhin durch den Melt Volume Rate (MVR, auch Melt Volume Index) zu beurteilen. Dabei wird die Viskosität einer Polymerschmelze mit dem fraglichen Zusatzstoff der Viskosität einer unbehandelten Schmelze gegenübergestellt. Je weniger die Viskosität gegenüber einer unbehandelten Schmelze abfällt, desto günstiger.

Der Erfindung liegt daher die Aufgabe zugrunde, ein Flammschutzmittel zur Verfügung zu stellen, das eine verbesserte Verträglichkeit mit Polymeren besitzt.

Überraschenderweise wurde gefunden, dass Flammschutzmittel auf Melaminpolyphosphatbasis, die ein Additiv mit einer spezifischen Reservealkalität enthalten, eine besonders geringe Schädigung des umgebenden Kunststoffs (insbesondere durch Polymerabbau) bewirken, wenn sie in Kunststoffe eingearbeitet werden. Das bedeutet, dass die Verträglichkeit des Flammschutzmittels verbessert wurde, mithin das Flammschutzmittel stabilisiert wurde. Das Additiv mit Reservealkalität übt einen Stabilisierungseffekt aus. Bessere Verträglichkeit und Stabilisierungseffekt ergeben höhere Ausflusszeiten und niedrigere Ausflussmengen als nach dem Stand der Technik.

Die Erfindung betrifft daher ein stabilisiertes Flammschutzmittel, enthaltend
a) 98 bis 75 Gew.-% Melaminpolyphosphat b) 2 bis 25 Gew.-% Additiv mit Reservealkalität, wobei es sich dabei um Borphosphat, Calciumpyrophosphat, Calciumborat, Magnesiumpyrophosphat, Magnesiumborat, Zinkstearat und/oder Zinkpyrophosphat handelt und die Reservealkalität des Additivs mit Reservealkalität 0,5 bis 60 Gew.-% beträgt, und wobei unter Reservealkalinität der prozentuale NaOH-Gehalt einer Untersuchungssubstanz verstanden wird, der äquivalent zum Verbrauch an 0,1 N Salzsäure bei Titration der Untersuchungssubstanz in 0,02 %iger wässriger Suspension auf den pH-Wert 8,0 ist, nachdem zuvor bei Raumtemperatur 10 Minuten gerührt wurde. Bevorzugt enthält das stabilisierte Flammschutzmittel weiterhin eine Phosphinsäure und/oder ein Phosphinsäuresalz.

Bevorzugt enthält das stabilisierte Flammschutzmittel
a) 74 bis 25 Gew.-% Melaminpolyphosphat
b) 1 bis 10 Gew.-% Additiv mit Reservealkalität
c) 25 bis 75 Gew.-% Phosphinsäure/-salz ausgewählt aus der Gruppe Aluminiumtrisdiethylphosphinat, Aluminiumtrismethylethylphosphinat, Titanylbisdiethylphosphinat, Titantetrakisdiethylphosphinat, Titanylbismethylethylphosphinat, Titantetrakismethylethylphosphinat, Zinkbisdiethylphosphinat, Zinkbismethylethylphosphinat und Mischungen davon.

Bevorzugt ist der Melamingehalt der Melaminpolyphosphate 0,9 bis 2,0 je mol Phosphor.

Bevorzugt beträgt der Kondensationsgrad n der Melaminpolyphosphate 7 bis 200, bevorzugt 15 bis 150.

Bevorzugt ist der pH-Wert einer Aufschlämmung des erfindungsgemäßen stabilisierten Flammschutzmittels von 10 Gew.-% in Wasser größer oder gleich 5. Bevorzugt beträgt die Teilchengröße (d₉₀) des Additivs mit Reservealkalität 0,01 bis 500 µm, besonders bevorzugt 1 bis 50 µm.

Bevorzugt enthält das stabilisierte Flammschutzmittel weiterhin mindestens einen Binder.

Bevorzugt liegt das stabilisierte Flammschutzmittel in Granulatform vor.

Die Erfindung betrifft daher auch ein stabilisiertes Flammschutzmittel in Granulatform, enthaltend
a) 98,9 bis 70 Gew.-% Melaminpolyphosphat
b) 1 bis 30 Gew.-% Additiv mit Reservealkalität
c) 0,1 bis 10 Gew.-% Bindemittel.

Beansprucht werden auch flammgeschützte Polymerformmassen, dadurch gekennzeichnet, dass sie 1 bis 60 Gew.-% stabilisiertes Flammschutzmittel nach mindestens einem der Ansprüche 1 bis 10, 1 bis 98,5 Gew.-% Polymer oder Mischungen derselben,
0,5 bis 60 Gew.-% Additive enthalten.

Beansprucht werden daher auch flammgeschützte Polymer-Formkörper, -Filme, -Fäden und -Fasern, dadurch gekennzeichnet, dass sie das erfindungsgemäße stabilisierte Flammschutzmittel nach mindestens einem der Ansprüche 1 bis 10 enthalten.

Bevorzugt enthalten diese flammgeschützten Polymer-Formkörper, -Filme, -Fäden und -Fasern
1 bis 60 Gew.- % stabilisierte Flammschutzmittel nach mindestens einem der Ansprüche 1 bis 14,
1 bis 98,5 Gew.-% Polymer oder Mischungen derselben,
0,5 bis 60 Gew.-% Additive.

Bevorzugt enthalten die flammgeschützten Polymer-Formkörper, -Filme, -Fäden und -Fasern
60 bis 99 Gew.- % flammgeschützte Polymerformmasse nach Anspruch 11,
1 bis 40 Gew.-% Polymer oder Mischungen derselben.

Bevorzugt beträgt die Restfeuchte des erfindungsgemäßen stabilisierten Flammschutzmittels 0,01 bis 10 Gew.-%, besonders bevorzugt 0,1 bis 1 Gew.-%.

Überraschend wurde gefunden, dass die Restfeuchte innerhalb des gewählten bevorzugten Bereiches günstig für die Verträglichkeit des stabilisierten Flammschutzmittels mit dem Polymer ist. Restfeuchten über den bevorzugten Bereichen verringern die Verträglichkeit, d.h. erhöhen die Ausflussmenge aus der Spritzdüse, verringern die Ausflusszeit, verschlechtern die Melt Volume Rate der flammgeschützten Polymerformmassen und verschlechtern die mechanischen Festigkeitswerte der flammgeschützten Polymerformkörper. Noch niedrigere Restfeuchten sind technisch schwer zu realisieren.

Bevorzugt beträgt die mittlere Teilchengröße (d50) des erfindungsgemäßen stabilisierten Flammschutzmittels 0,1 bis 3000 µm, besonders bevorzugt 0,1 bis 1000 µm und insbesondere 1 bis 100 µm.

Bevorzugt beträgt die mittlere Teilchengröße (d50) des erfindungsgemäßen stabilisierten Flammschutzmittels 0,1 bis 1000 µm, besonders bevorzugt 10 bis 100 µm.

In einer anderen Ausführungsform beträgt die mittlere Teilchengröße (d50) des erfindungsgemäß stabilisierten Flammschutzmittels in Granulatform 100 bis 3000 µm, bevorzugt 200 bis 2000 µm.

Mittlere Teilchengrößen (d50) innerhalb des erfindungsgemäß bevorzugten Bereiches verbessern die Verträglichkeit des Flammschutzmittels mit dem Polymer.

Größere mittlere Teilchengrößen können zu Inhomogenitäten (Hot-Spots) führen und die Verträglichkeit des Flammschutzmittels mit dem Polymer mindern. Kleinere mittlere Teilchengrößen sind technisch allerdings schwer zu realisieren.

Bevorzugt beträgt die Schüttdichte des erfindungsgemäßen stabilisierten Flammschutzmittels von 80 bis 1500 g/l, besonders bevorzugt 200 bis 1000 g/l. Bevorzugt wird das erfindungsgemäße stabilisierte Flammschutzmittel in konfektionierter Form eingesetzt. Erfindungsgemäße Formen können gecoatet, staubreduziert, kompaktiert, extrudiert, schmelzgranuliert, tropfgranuliert, dispergiert, granuliert, agglomeriert, sprühgranuliert oder auch anders behandelt sein.

Überraschend wurde gefunden, dass das erfindungsgemäße stabilisierte Flammschutzmittel in konfektionierter Form die Verträglichkeit mit dem Polymer verbessert, indem es die Einarbeitung erleichtert, das heißt einfacher zu homogen verteiltem Flammschutzmittel führt, beziehungsweise kleinere dispergierte Flammschutzmittelaggregate im Polymer ergeben. Das erfindungsgemäße stabilisierte Flammschutzmittel liegt bevorzugt in Granulatform vor. In einer Ausführungsform hat das Granulat bevorzugt Zylinderform mit kreisförmiger, eliptischer oder unregelmäßiger Grundfläche, Kugelform, Kissenform, Würfelform, Quaderform, Prismenform.

Das Längen-zu-Durchmesser-Verhältnis des zylinderförmigen Granulates beträgt 1 zu 50 bis 50 zu 1, bevorzugt 1 zu 5 bis 5 zu 1.

Der Durchmesser des zylinderförmigen Granulates beträgt bevorzugt von 0,5 bis 15mm, besonders bevorzugt von 1 bis 3 mm und bevorzugt eine Länge von 0,5 bis 15mm, besonders bevorzugt von 2 bis 5 mm.

Besonders bevorzugt sind Melaminpolyphosphate wie ®Melapür 200/70 der Fa. Ciba-DSM Melapur, ®Budit 3141, 3141 CA und 3141 CB und Melaminpolyphosphat/ Melaminpyrophosphat der Typen 13-1100, 13-1105, 13-1115, MPP02-244 der Fa. Hummel-Croton und PMP-200 der Fa. Nissan.

In einer weiteren Ausführungsform sind als Melaminpolyphosphate Kondensationsprodukte des Melamins oder Umsetzungsprodukte des Melamins mit Phosphorsäure bzw. Umsetzungsprodukte von Kondensationsprodukten des Melamins mit Phosphorsäure sowie Gemische der genannten Produkte bevorzugt. Kondensationsprodukte des Melamins sind z.B. Melem, Melam oder Melon bzw. höher kondensierte Verbindungen dieses Typs sowie Gemische derselben.

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen. Beispiele hierfür sind Melaminpolyphosphat, Melampolyphosphat und Melempolyphosphat bzw. gemischte Polysalze.

In einer weiteren Ausführungsform sind als Melaminpolyphosphate solche Produkte bevorzugt, die durch thermische Nachbehandlung von Umsetzungsprodukten von Melamin und/oder von Kondensationsprodukten des Melamins mit Phosphorsäure erhalten werden.

Der Melamingehalt der Melaminpolyphosphate ist bevorzugt größer als 0,9 mol je mol Phosphor.

Der Melamingehalt der Melaminpolyphosphate ist bevorzugt größer als 1,1 mol je mol Phosphor.

Der Melamingehalt der Melaminpolyphosphate ist bevorzugt größer als 1,2 mol je mol Phosphor.

Der Melamingehalt der Melaminpolyphosphate ist bevorzugt 0,9 bis 2,0mol je mol Phosphor.

Bevorzugt handelt es sich bei dem Melamingehalt um chemisch, d.h. ionisch gebundenes, Melamin und/oder dessen Kondensationsprodukte. Es ist kein freies Melamin nachweisbar.

Bevorzugt setzen sich erfindungsgemäße Melaminpolyphosphate zu variablen Anteilen aus folgenden Inhaltsstoffen zusammen: Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat.

Der Gehalt an Orthophosphat in den Melaminpolyphosphaten beträgt bevorzugt 0,01 bis 20 mol-% Phosphor, besonders bevorzugt 1 bis 10 mol-%.

Überraschend wurde gefunden, dass ein Orthophosphatgehalt innerhalb der erfindungsgemäß bevorzugten Bereiche zu einer guten Verträglichkeit des stabilisierten Flammschutzmittels mit dem jeweiligen Polymer führt. Höhere Orthophosphatgehalte führen zu erhöhter Ausflussmenge und verringerten Ausflusszeiten. Geringere Orthophosphatgehalte als oben angegeben, obwohl wünschenswert, sind technisch schwer zu realisieren.

Bevorzugte Orthophosphat-Formen sind Melaminphosphat, Dimelaminphosphat, Pentamelamintriphosphat, Trimelamindiphosphat, Tetrakismelamintriphosphat, Hexakismelaminpentaphosphat, Melamindiphosphat und Melamintetra'phosphat.

Der Gehalt an Pyrophosphat in den erfindungsgemäßen Melaminpolyphosphaten beträgt bevorzugt 0,01 bis 20 mol-% Phosphor, besonders bevorzugt 0,1 bis 10 mol-%.

Überraschend wurde gefunden, dass ein Pyrophosphatgehalt innerhalb der erfindungsgemäß bevorzugten Bereiche zu einer guten Verträglichkeit des stabilisierten Flammschutzmittels mit dem jeweiligen Polymer führt. Höhere Pyrophosphatgehalte führen zu erhöhter Ausflussmenge und verringerten Ausflusszeiten. Geringere Pyrophosphatgehalte als oben angegeben, obwohl wünschenswert, sind technisch schwer zu realisieren. Bevorzugte Pyrophosphat-Formen sind Melaminpyrophosphat.

Der Gehalt an Polyphosphat der Melaminpolyphosphate beträgt bevorzugt 90 bis 99,9 mol-% Phosphor.

Überraschend wurde gefunden, dass ein Polyphosphatgehalt innerhalb der erfindungsgemäß bevorzugten Bereiche zu einer guten Verträglichkeit des stabilisierten Flammschutzmittels mit dem jeweiligen Polymer führt. Geringere Polyphosphatgehalte führen zu erhöhter Ausflussmenge und verringerten Ausflusszeiten. Höhere Polyphosphatgehalte als der vorgenannten, obwohl wünschenswert, sind technisch schwer zu realisieren.

Bevorzugte Polyphosphat-Formen sind Melaminpolyphosphat, Melampolyphosphat, Melempolyphosphat und/oder Melonpolyphosphat.

Der Kondensationsgrad n der erfindungsgemäßen Melaminpolyphosphate beträgt bevorzugt 7 bis 200, besonders bevorzugt 15 bis 150.

Der Kondensationsgrad n der erfindungsgemäßen Melaminpolyphosphate ist in einer weiteren Ausführungsform größer als 20.

Überraschend wurde gefunden, dass ein Kondensationsgrad innerhalb der erfindungsgemäß bevorzugten Bereiche zu einer guten Verträglichkeit des stabilisierten Flammschutzmittels mit dem jeweiligen Polymer führt. Geringere Kondensationsgrade führen zu erhöhter Ausflussmenge und verringerten Ausflusszeiten. Höhere Kondensationsgrade als oben angegeben, obwohl wünschenswert, sind technisch schwer zu realisieren.

Der pH-Wert eines Slurrys von 10 Gew.-% des Melaminpolyphosphats in Wasser ist bevorzugt größer als 5. In einer anderen Ausführungsform ist der pH-Wert bevorzugt 3 bis 8, besonders 4 bis 7.

Die mittlere Teilchengröße (d50) der Melaminpolyphosphate beträgt bevorzugt 1 bis 100 µm, besonders bevorzugt 6 bis 20 µm.
Die Restfeuchte der erfindungsgemäßen Melaminpolyphosphate beträgt bevorzugt 0,01 bis 10 Gew.-%, bevorzugt 0,1 bis 1 Gew.-%.

Kennzeichnende Daten zum Additiv mit Reservealkalitat.

Unter Reservealkalitat wird die Fähigkeit verstanden, bestimmte Mengen an sauren Anteilen (Komponenten) neutralisieren zu können.

Dabei handelt es sich um einen fiktiven prozentualen NaOH-Gehalt in der Untersuchungssubstanz, der äquivalent ist zum Verbrauch an 0,1 N Salzsäure bei der Titration der Untersuchungssubstanz in 0,02 %iger wässriger Suspension auf den pH-Wert 8,0 nachdem zuvor 10 min bei Raumtemperatur gerührt wurde. Die Reservealkalität des Additivs mit Reservealkalität beträgt bevorzugt 0,5 bis 60 Gew.-%, bevorzugt 1 bis 5 Gew.-%.

Überraschend wurde gefunden, dass Additive mit Reservealkalitat innerhalb des erfindungsgemäß bevorzugten Bereiches die Verträglichkeit des stabilisierten Flammschutzmittels mit dem jeweiligen Polymeren verbessern. Additive mit Reservealkalitat unterhalb des erfindungsgemäß bevorzugten Bereiches führen nicht zu einem Stabilisierungseffekt.

Die Restfeuchte des Additivs mit Reservealkalität beträgt 0,01 bis 10 Gew.-%, bevorzugt 0,1 bis 1 Gew.-%

Die Teilchengröße (d90) des Additivs mit Reservealkalität beträgt bevorzugt 0,01 bis 500 µm, besonders bevorzugt 1 bis 50 µm. Eine Teilchengröße d90 von 50 µm bedeutet, dass 90 % des untersuchten Pulvers durch ein Sieb mit der Maschenweite 50 µm passieren würden.

Überraschend wurde gefunden, dass die Teilchengröße des Additivs mit Reservealkalität innerhalb des erfindungsgemäß bevorzugten Bereiches zu einem verbesserten Stabilisierungseffekt führen. Teilchengrößen über- und unterhalb führen nicht zu dem gewünschten Stabilisierungseffekt.

Die L-Farbwerte des Additivs mit Reservealkalität beträgt bevorzugt von 85 bis 99,9, besonders bevorzugt 90 bis 98.

Die a-Farbwerte des Additivs mit Reservealkalität beträgt bevorzugt von -4 bis +9, besonders bevorzugt -2 bis +6.

Die b-Farbwerte des Additivs mit Reservealkalität beträgt bevorzugt von -2 bis +6, besonders bevorzugt -1 bis +3.

Die Farbwerte werden im System nach Hunter (CIE-LAB-System, Commission Internationale d'Eclairage) angegeben. L-Werte gehen von 0 (schwarz) bis 100 (weiß), a-Werte von -a (grün) bis +a (rot) und b-Werte von -b (blau) bis +b (gelb). Bevorzugte Additive mit Reservealkalität sind Oxide, Hydroxide, Carbonate, Silikate, Borate, Stannate, gemischte Oxid-Hydroxide, Oxid-Hydroxid-Carbonate, Hydroxid-Silikate oder Hydroxid-Borate oder Mischungen dieser Stoffe.

Die Additive mit Reservealkalität sind Borphosphat, Calciumpyrophospbat, Calciumborat, Magnesiumpyrophosphat, Magnesiumborat, Zinkstearat und/oder Zinkpyrophosphat.

Bevorzugt wird das erfindungsgemäße stabilisierte Flammschutzmittel in konfektionierter Form eingesetzt. Erfindungsgemäße Formen können gecoatet, staubreduziert, kompaktiert, extrudiert, schmelzgranuliert, tropfgranuliert, dispergiert, granuliert, agglomeriert, sprühgranuliert oder auch anders behandelt sein.

Bevorzugt wird bei der Konfektionierung ein Granulierhilfsmittel eingesetzt. Bevorzugtes Granulierhilfsmittel ist Wasser. Das Verhältnis von Wasser zur Summe der restlichen Inhaltsstoffe des erfindungsgemäßen stabilisierten Flammschutzmittels beträgt 1 zu 50 bis 50 zu 1, bevorzugt 1 zu 10 bis 10 zu 1.

Bevorzugt enthält das konfektionierte stabilisierte Flammschutzmittel Bindemittel.

Bevorzugte Bindemittel dafür sind auch Homopolymere der Styrolsulfonsäure (PSS) und/oder deren Alkalisalze mit Molgewichten von 50.000 bis 2.000.000.

Bevorzugte Bindemittel sind Copolymere von Styrolsulfonsäure und Maleinsäure im Molverhältnis 1 zu 2 bis 2 zu 1 und/oder deren Alkalisalze mit Molgewichten von 5.000 bis 100.000.

Bevorzugte Bindemittel sind polymere Polycarboxylate, beispielsweise die Natriumsalze der Polyacrylsäure oder der Polymethacrylsäure, insbesondere solche mit einer relativen Molekülmasse von 800 bis 150.000 (auf Säure bezogen).

Bevorzugte Bindemittel sind copolymere Polycarboxylate, insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 5.000 bis 200.000, vorzugsweise 10.000 bis 120.000 und insbesondere 50.000 bis 100.000.

Bevorzugte Bindemittel sind Polymere mit mehr als zwei verschiedenen Monomereinheiten, beispielsweise solche, die als Monomere Salze der Acrylsäure und der Maleinsäure sowie Vinylalkohol bzw. Vinylalkohol-Derivate oder die als Monomere Salze der Acrylsäure und der 2-Alkylallylsulfonsäure sowie Zucker-Derivate enthalten.

Bevorzugte Bindemittel sind auch Copolymere, die als Monomere vorzugsweise Acrolein und Acrylsäure/Acrylsäuresalze bzw. Vinylacetat aufweisen.

Bevorzugte Bindemittel sind Oxidationsprodukte von carboxylgruppenhaltigen Polyglucosanen und/oder deren wasserlösliche Salze.

Bevorzugte Bindemittel sind Polyasparaginsäuren bzw. deren Salze und Derivate.

Bevorzugte Bindemittel sind Polyacetale, welche durch Umsetzung von Dialdehyden mit Polyolcarbonsäuren erhalten wurden, welche 5 bis 7 C-Atome und mindestens 3 Hydroxylgruppen aufweisen. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Bevorzugte Bindemittel sind Polyvinylpyrrolidone (PVP) die kommerziell in verschiedenen Molekulargewichten (MW) verfügbar sind als ^{®}Luviskol (Fa. BASF, Deutschland; ^{®}Luviskol K90 (MW = 1.200.000 bis 2.000.000), ^{®}Luviskol K30 (MW = 45.000 bis 55.000), ^{®}Luviskol K17 (MW = 7.000 bis 11.000)). Besonders bevorzugt ist Polyvinylpyrrolidon mit einem Molekulargewicht zwischen 45.000 und 2.000.000.

Bevorzugte Bindemittel sind weiterhin Polyvinylalkohol (^{®}Mowiol.8-88, ^{®}Mowiol 40-88, ^{®}Mowiol 3-85 von Fa. Kuraray). Besonders bevorzugt sind teilverseifte Polyvinylalkohole mit 85 bis 95 Mol-% Hydrolysegrad, einem Esterwert von 80 bis 220 mg KOH/g und einer Viskosität von 2,5 bis 49 mPa*s bei 20°C in 4 Gew.-% wässriger Dispersion. Besonders bevorzugt sind auch vollverseifte Polyvinylalkohole mit 97 bis 100 Mol-% Hydrolysegrad, einem Esterwert von 3 bis 40 mg KOH/g und einer Viskosität von 2,8 bis 60 mPa*s bei 20°C in 4 Gew.-% wässriger Dispersion. Bevorzugte Bindemittel sind Polyvinylbutyral (PVB), Polyvinylcaprolactam und Hydroxyethylcellulose, Hydroxypropylcellulose sowie Natriumcarboxymethylcellulose.

### Vinylacetat-Polymere

Bevorzugt sind Bindemittel auf Basis von mindestens einem folgender Monomere oder Mischungen davon: Vinylacetat, 2-Ethylhexylacrylat, Acrolein, Acrylester, Acrylsäure, Crotonsäure, Dibutylmaleat, Ethylen, Methylmetacrylat, n-Butylacrylat, N-hydroxymethylacrylamid, N-Vinylpyrrolidon, Styrol, tert-Butylchlorid, Vinylchlorid, Vinyllaurat, Vinylpropionat. Bevorzugte Vertreter sind ™Airflex EP3360, EP16, EAF375 der Fa. Air Products und ™Mowilith LDM der Fa. Kuraray.

### Acrylate

Bevorzugt sind Bindemittel auf Basis von mindestens einem folgender Monomere oder Mischungen davon: Methacrylat, 1,2-Butadien, 1,3-Butadien, 2-Ethylhexylacrylat, Acrylamid, Acrylnitril, Acrylsäure, Ethylacrylat, Ethylmethacrylat, Isobutylacrylat, Isobutylmethacrylat, Laurylacrylat und/oder Methylmethacrylat, Methacrylamid Methacrylnitril, Methacrylsäure, n-Butylacrylat, n-Butylmethacrylat, n-Hexylacrylat, n-Hexylmethacrylat, n-Propylacrylat, sec-Butylacrylat, Styrol, tert-Butylacrylat, tert-Butylmethacrylat, Vinylacetat, Vinylchlorid, Vinylidenchlorid, Vinylpropionat. Bevorzugte Vertreter sind Acronal 18D der Fa. BASF.

### Bevorzugte Bindemittel sind auch filmbildende Bindemittel.

Bevorzugte Bindemittel sind auch Homopolymerisate auf Basis Vinylacetat, Copolymerisate auf Basis Vinylacetat, Ethylen und Vinylchlorid, Copolymerisate auf Basis Vinylacetat und einem Vinylester einer langkettigen, verzweigten Carbonsäure, Copolymerisate auf Basis Vinylacetat und Maleinsäure-di-n-Butylester, Copolymerisate auf Basis Vinylacetat und Acrylsäureester, Copolymerisate auf Basis Styrol und Acrylsäureester, Copolymerisate auf Basis Acrylat/Vinyltoluol, Copolymerisate auf Basis Acrylat/Styrol, Copolymerisate auf Basis Acrylat/Vinyl und/oder selbstvernetzende Polyurethan-Dispersionen.

### Weitere Additive

Bevorzugt einsetzbare Additive zu den erfindungsgemäßen stabilisierten Flammschutzmitteln sind Dialkylphosphinsäure-Salze der Formel (I) 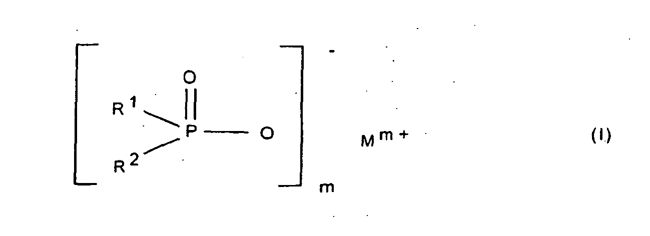 worin
- R¹, R²: gleich oder verschieden sind und C₁-C₆-Alkyl, linear oder verzweigt;
- M: Mg, Ca, Al, Sb, Sn, Ge, Ti, Fe, Zr, Zn, Ce, Bi, Sr, Mn, Li, Na, K und/oder eine protonierte Stickstoffbase ;
- m: 1 bis 4.

Bevorzugt bedeutet M Aluminium, Calcium, Titan, Zink, Zinn oder Zirkonium.

Bevorzugt sind R¹, R² gleich oder verschieden und bedeuten C₁-C₆-Alkyl, linear oder verzweigt.

Besonders bevorzugt sind R¹, R² gleich oder verschieden und bedeuten Methyl, Ethyl, n-Propyl, iso-Propyl, n-Butyl, iso-Butyl, tert.-Butyl, n-Pentyl, iso-Pentyl, n-Hexyl und/oder iso-Hexyl.

Bevorzugte Dialkylphosphinsäure-Salze sind Aluminiumtrisdiethylphosphinat, Aluminiumtrismethylethylphosphinat, Titanylbisdiethylphosphinat, Titantetrakisdiethyl-phosphinat, Titanylbismethylethylphosphinat, Titantetrakismethylethylphosphinat, Zinkbisdiethylphosphinat; Zinkbismethylethylphosphinat und Mischungen davon.

Der Telomerengehalt der erfindungsgemäßen Dialkylphosphinsäuresalze beträgt bevorzugt 0,1 bis 5 Gew.-%.

Bevorzugt handelt es sich bei den Telomeren um solche aus der Gruppe C₂-Alkyl-C₄-Alkyl-Phosphinsäure-Salze, C₄-Alkyl-C₄-Alkyl-Phosphinsäure-Salze, C₂-Alkyl-C₆-Alkyl-Phosphinsäure-Salze, C₄-Alkyl-C₆-Alkyl-Phosphinsäure-Salze und: C₆-Alkyl-C₆-Alkyl-Phosphinsäure-Salze. Bevorzugt handelt es sich bei den Telomeren um Ethyl-Butylphosphinsäure-Salze, Butyl-Butylphosphinsäure-Salze, Ethyl-Hexylphosphinsäure-Salze, Butyl-Hexylphosphinsäure-Salze, Hexyl-Hexylphosphinsäure-Salze.

Die mittlere Teilchengröße (d50) der Dialkylphosphinsäuresalze beträgt 0,1 bis 3000 µm, bevorzugt 0,1 bis 1000 µm und insbesondere 1 bis 100 µm.

Bevorzugte Additive zu den erfindungsgemäßen stabilisierten Flammschutzmitteln sind Antioxidantien wie aromatische Amine, sterisch gehinderte Phenole (Butyliertes Hydroxotoluol (BHT), Thiobisphenol, höhermolekulare Polyphenole, Tetrakis(methylen[2,5-di-tert-butyl-4-hydroxyhydrocinnamat])methan (^{®}Irganox 1010, Octadecyl-3,5-di-tert-butyl-4-hydroxyhydrocinnamat (^{®}Irganox 1076), Organophosphite (Tris(nonylphenyl)phosphit (TNPP)), Thioester (Distearyl-3,3'-thiodipropionate, Di-tridecyl-3,3'-thiodipropionat, Dilauryl-3,3'-thiodipropionat), Metalldeaktivatoren (^{®}Irganbx 1024), Vitamin E (alpha-Tocopherol), Lacton oder Hydroxylamin.

Bevorzugt einsetzbare Additive zu den erfindungsgemäßen stabilisierten Flammschutzmitteln sind Antistatica wie Fettsäureester (Glycerin, Polyethylenglykolester, Sorbitolester), quartärnäre Ammoniumverbindungen, ethoxylierte Amine sowie Alkylsulfonate.

Bevorzugt einsetzbare Additive zu den erfindungsgemäßen stabilisierten Flammschutzmitteln sind Treibmittel wie Azodicarbonamid, p,p-Oxybis(benzolsulfonyl-hydrazid) (OBSH), 5-Phenyltetrazol (5PT), p-Toluolsulfonylsemicarbazid (TSSC) sowie Trihydrazintriazin (THT).

Bevorzugt einsetzbare Additive zu den erfindungsgemäßen stabilisierten Flammschutzmitteln sind Flammschutzmittel wie Aluminiumtrihydrat, Antimonoxid, bromierte aromatische oder cycloaliphatische Kohlenwasserstoffe, Phenole, Ether, Chlorparaffin, Hexachlorocyclopentadien-Adducte (^{®}Dechloran Plus, Occidental Chemical Co), Roter Phosphor, Melaminderivate, Melamincyanurate, Ammoniumpolyphosphate und Magnesiumhydroxid.

Bevorzugt einsetzbare Additive zu den erfindungsgemäßen stabilisierten Flammschutzmitteln sind Hitzestabilisatoren wie Bleistabilisatoren, dibasisches Bleiphthalat, dibasisches Bleistearat, Bleisilicat, Monobasisches und tribasisches Bleisulfat, Dibasisches Bleicarbonat, Dibasisches Bleiphosphit), Gemischt-MetallSalze (Barium-Cadmium-Salze von, Barium-Zink-Salze und Calcium-Zink-Salze von 2-Ethylhexylcarbonsäure, Stearinsäure, Ricinoleinsäure und/oder Laurinsäure bzw. substituierte Phenole, Organozinn-Stabilisatoren (Mono- und Dialkylzinnmercaptide (Thioglycolate), Dialkylzinncarboxylate (Maleate, Laurate, Zinnester),und sekundäre Hitzestabilisatoren (Alkyl-/Arylorganophosphite, Epoxyverbindungen ungesättigter Fettsäuren und Fettsäureester).

Bevorzugt einsetzbare Additive zu den erfindungsgemäßen stabilisierten Flammschutzmitteln sind Schlagzähmodifikatoren/Prozesshilfsmittel wie Acrylate, Acryl-nitril-Butadien-Styrol (ABS), Chloriertes Polyethylen (CPE), Ethylen-Propylen Terpolymer (EPT), Ethalen-Vinylacetat (EVA) und Methacrylat-Butadien-Styrol (MBS).

Bevorzugt einsetzbare Additive zu den erfindungsgemäßen stabilisierten Flammschutzmitteln sind Gleitmittel wie Fettsäureamide (Fettsäuremonoamide, Fettsäurebisamide, Oleamide, Erucamide, Ethylen-bis-stearamid (EBSA), Ethylen-bis-oleamid (EBOA)), Fettsäuren-/Fettsäureester (C₁₆-C₁₈ (Palmfettsäure, Stearinsäure, Ölsäure)), Fettsäurealkohole (Cetylalkohol, Stearylalkohol), Wachse (Paraffinwachse, Polyethylenwachse), Metallstearate (Calciumstearat, Zinkstearat, Magnesiumstearat, Bariumstearat, Aluminiumstearat, Cadmiumstearat, Bleistearat).

Bevorzugt einsetzbare Additive zu den erfindungsgemäßen stabilisierten Flammschutzmitteln sind Lichtschutzmittel wie UV-Absorber (Alkylsubstituierte Hydroxybenzophenone z.B. 2-Hydroxy-4-Alkoxybenzophenone, Alkylsubstituierte Hydroxybenzothiazole z.B. 2-Hydroxy-3,5-dialkylbenzothiazole), UV-Quencher (Nickel- und Zink diethyldithiocarbamat, n-Butylamin-Nickel-2,2'-thiobis-(4-t-octylphenolat), Nickel-bis(3,5-di-t-butyl-4-hydroxybenzyl)phosphonsäure monoethylester), Radikalinhibitoren (Bis-(2,2',6,6'-tetramethyl-4-piperidyl)sebacat (HALS)), Hydroperoxidzersetzer (Dithiophosphate).

Bevorzugt als Additive ergänzbar sind weiterhin Antidrippingmittel, Compatibilizer, Füllstoffe, Verstärkungsstoffe, Keimbildungsmittel, Nukleierungsmittel, Additive zur Lasermarkierung, Hydrolysestabilisatoren, Kettenverlängerer, Farbpigmente, Weichmacher und Plastifizierungsmittel.

Die Erfindung betrifft auch ein Verfahren zur Herstellung von stabilisierten Flammschutzmitteln, welche Melaminpolyphosphat und mindestens ein Additiv mit Reservealkalinität enthalten.

### Mischen

Das erfindungsgemäße stabilisierte Flammschutzmittel kann in einer Ausführungsform hergestellt werden, indem die inhaltsstoffe in einem geeigneten Mischer 0,01 bis 10 Stunden bei 0 bis 300°C ohne Kornaufbau gemischt werden.

Erfindungsgemäße Mischer können sein: Pflugscharmischertypen der Fa. Lödige, Ringspaltmischertypen der Fa. Lödige, (z.B. Typ CB30), Flexomix-Mischertypen der Fa. Schugi, Ringspaltmischer Typ HEC der Fa. Niro, Ringschichtmischer (z.B. Typ K-TTE4) der Fa. Drais/Mannheim, Eirich-Mischer (z.B. Typ R02), Telschig-Mischer (Typ WPA6), Hauf-Mischer (die beiden letzten arbeiten nach dem Freifallprinzip) Zig-Zag-Mischer der Fa. Niro und Mischer der Fa. Nauta, in denen das Mischgut nach dem Archimedes-Prinzip durch eine Schnecke umwälzt wird. Weiterhin geeignet sind Taumel- und Hobartmischer.

Das Verfahren zur Herstellung von stabilisierten Flammschutzmitteln, welche Melaminpolyphosphat und mindestens ein Additiv mit Reservealkalinität enthalten, kann auch ein Teil einer Konfektionierung sein. Ein konfektioniertes, stabilisiertes Flammschutzmittel besitzt eine gezielt eingestellte Korngröße, die z.B. größer ist als die der eingesetzten Melaminpolyphosphate und Additive.

Das erfindungsgemäße stabilisierte Flammschutzmittelgranulat kann in einer Ausführungsform hergestellt werden, indem das Granulierhilfsmittel und/oder das Bindemittel in einem geeigneten Mischer oder einem Granulierteller zu der bewegten Mischung aus Melaminpolyphosphat und dem Additiv mit Reservealkalinität gegeben und 0,01 bis 10 Stunden bei 0 bis 300°C gemischt wird.

Das zunächst entstehende Rohprodukt kann in einem geeigneten Trockner getrocknet beziehungsweise zum weiteren Kornaufbau getempert werden. Erfindungsgemäße Trockner können sein: Fließbetttrockner der Fa. Hosokawa Schugi (Typen: Schugi Fluid-Bed, Vometec Fließbett-Trockner), Wirbeibetttrockner der Fa. Waldner bzw. der Fa. Glatt, Turbo-Flugschichttrockner der Fa. Waldner, Spin-flash-Trockner der Fa. Anhydro sowie Trommeltrockner.

Bevorzugte Betriebsbedingungen im Fließbetttrockner sind: Lufteintrittstemperatur 120 bis 280°C, Produkttemperatur 20 bis 200°C.

Das erfindungsgemäße stabilisierte Flammschutzmittel kann in einer Ausführungsform durch Rollkompaktierung hergestellt werden. Dabei werden die Feststoffpartikel durch äußere Druckeinwirkung zwischen zwei Rollen gegeneinander verhackt. Der sich bildende Feststoffkörper wird mechanisch durch Brechen in Körner zerkleinert, die in Über-, Gut- und Unterkorn klassiert werden. Das Gutkorn stellt das Zielprodukt dar, Über- und Unterkorn werden recycliert.

Bevorzugt wird unter einem Druck von 1 kN/cm² bis 60 kN/cm² verdichtet

Bevorzugte Apparate für die Rollkompaktierung sind Kompaktoren der Firmen Hosokawa-Bepex GmbH (Pharmapaktor®), Alexanderwerk (WP 120 x 40 V, WP 170 x 120 V, WP 200 x 75 VN, WP 300 x 100 V) und Walzenpressen der Firma Köppern.

Durch Mahlung und nachfolgende Klassierung wird die Korngröße optimal eingestellt. Zur Mahlung eignen sich beispielsweise Hammermühlen, Prallmühlen Schwingmühlen, Kugelmühlen, Walzen- und Pendelrollmühlen der Fa. Neuman & Esser sowie Luftstrahlmühlen wie Typen der Fa. Hosokawa-Alpine. Als Klassierung dienen Sichtung und/oder Siebung. Zur Siebung können z.B. Allgeier-, Rhewum-, Locker-Siebe dienen.

Das erfindungsgemäße stabilisierte Flammschutzmittel kann in einer Ausführungsform dadurch hergestellt werden, dass die Inhaltsstoffe d.h. mindestens das Melaminpolyphosphat und mindestens ein Additiv mit Reserveatkatinität gemischt, stranggepresst, abgeschlagen (bzw. gegebenenfalls gebrochen und klassiert) und getrocknet (und gegebenenfalls gecoated) werden.

Das Strangpressen erfolgt bevorzugt bei 10 bis 500°C.

Bevorzugt sind dazu Granulierpressen der Fa. Kahl (z. B. Pressentype ®24-390/500), Pelettierpressen der Fa. Schlüter (Typen ®PP 85, PP 127, PP 200, PP 360), Benchtop Granulatoren der Fa. Fitzpatrick, Niederdruck-Dome- bzw. Basketextruder der Fa Fitzpatrick, Zweischnecken- oder Doppelschnecken-Extruder der Fa. Leistritz (Typen ®ZSE 27 / 40 / 50 / 60 / 75 / 100 / 135, ZSE 27 HP / 40 / 50 / 60 / 75 / 87), Laborextruder der Fa. Leistritz (Typen ®MICRO 18 / 27), Einschneckenextruder er Fa. Leistritz (Typen ®ESE 30 / 40 / 50 / 60 / 70 / 80 / 90 / 120 / 150 / 200), Wasserring-Granulatoren etc. und/oder Kreis-Kompaktoren (Kollergang).

Das erfindungsgemäße stabilisierte Flammschutzmittel kann in einer Ausführungsform durch Sprühgranulierung hergestellt werden. Bei der Granulierung im Sprühbett wird das zu agglomerierende Material durch einen Rührer oder durch strömendes Gas zu einer Wirbelschicht aufgelockert. In diese Wirbelschicht wird weiteres zu agglomerierendes Material, das in einem Lösungsmittel dispergiert ist, aufgesprüht. Die nassen Partikel lagern sich an die bereits vorhandenen Agglomerate an. Das Lösungsmittel wird durch einen heißen Gasstrom verdampft und die Agglomerate so getrocknet. Ein Teil des Wirbelbetts wird kontinuierlich ausgetragen, das Gutkorn abgetrennt, grobe Partikel zerkleinert und mit zu feinen in das Wirbelbett zurückgeführt.

### Verwendung des stabilisierten Flammschutzmittels

Bevorzugt ist die Verwendung der erfindungsgemäßen stabilisierten Flammschutzmittel aus Melaminpolyphosphat und mindestens einem Additiv mit Reservealkalinität in flammgeschützten Polymer-Formmassen und flammgeschützten Polymer-Formkörpern

### Verfahren zur Stabilisierung von Flammschutzmitteln

Bevorzugt ist ein Verfahren zur Stabilisierung von Flammschutzmitteln, dadurch gekennzeichnet, dass man
a) 1 bis 99 Gewichtsteile Additiv mit Reservealkalität zu
b) 99 bis 1 Gewichtsteilen erfindungsgemäßem Melaminpolyphosphat zusetzt.

Bevorzugt ist ein Verfahren zur Stabilisierung von Flammschutzmitteln, dadurch gekennzeichnet, dass man
a) 0,3 bis 30 Gewichtsteile Additiv mit Reservealkalität zu
b) 99,7 bis 70 Gewichtsteile erfindungsgemäßes Melaminpolyphosphat zusetzt.

Besonders bevorzugt ist ein Verfahren zur Stabilisierung von Flammschutzmitteln, dadurch gekennzeichnet, dass man
a) 3 bis 30 Gewichtsteile Additiv mit Reservealkalität zu
b) 97 bis 70 Gewichtsteile erfindungsgemäßes Melaminpolyphosphat zusetzt.

Bevorzugt ist auch ein Verfahren zur Stabilisierung von Flammschutimitteln, dadurch gekennzeichnet, dass man
a) 1 bis 98 Gewichtsteile Additiv mit Reservealkalität zu
b) 98 bis 1 Gewichtsteile erfindungsgemäßem Melaminpolyphosphat und
c) 1 bis 98 Gewichtsteile Phosphinsäure zusetzt.

Besonders bevorzugt ist ein Verfahren zur Stabilisierung von Flammschutzmitteln, dadurch gekennzeichnet, dass man
a) 1 bis 10 Gewichtsteile Additiv mit Reservealkalität zu
b) 89 bis 10 Gewichtsteile erfindungsgemäßem Melaminpolyphosphat
c) 10 bis 80 Gewichtsteile Phosphinsäure zusetzt.

Bevorzugt ist auch ein Verfahren zur Stabilisierung von Flammschutzmitteln, dadurch gekennzeichnet, dass man
a) 3 bis 30 Gewichtsteile Additiv mit Reservealkalität zu
b) 97 bis 70 Gewichtsteile erfindungsgemäßem Melaminpolyphosphat
c) 0,1 bis 10 Gewichtsteile Bindemittel zusetzt.

Überraschend wurde gefunden, dass durch das erfindungsgemäße Verfahren der Stabilisierung von Flammschutzmitteln höhere Ausflusszeiten und niedrigere Ausflussmengen als nach dem Stand der Technik erreicht werden können.

### Flammgeschützte Polymerformmassen

Die Erfindung betrifft auch flammgeschützte Polymerformmassen, enthaltend das erfindungsgemäße stabilisierte Flammschutzmittel.

Bevorzugt enthält die flammgeschützte Polymerformmasse
1 bis 60 Gew.-% erfindungsgemäßes stabilisiertes Flammschutzmittel,
1 bis 98,5 Gew.-% Polymer oder Mischungen derselben,
0,5 bis 60 Gew.-% Additive.

Bevorzugt enthält die flammgeschützte Polymerformmasse auch 1 bis 60 Gew.-% erfindungsgemäßes stabilisiertes Flammschutzmittel,
1 bis 98 Gew.-% Polymer oder Mischungen derselben,
0,5 bis 60 Gew.-% Additive und
0,5 bis 60 Gew.-% Füllstoff und/oder Verstärkungsstoff.

Besonders bevorzugt enthält die flammgeschützte Polymerformmasse 5 bis 30 Gew.-% erfindungsgemäßes stabilisiertes Flammschutzmittel,

5 bis 90 Gew.-% Polymer oder Mischungen derselben,
5 bis 40 Gew.-% Additive und
5 bis 40 Gew.-% Füllstoff und/oder Verstärkungsstoff.

Bevorzugt entstammen die Polymere aus der Gruppe der thermoplastischen Polymere wie Polyester, Polystyrol oder Polyamid und/oder der duroplastischen Polymere.

Die flammgeschützte Polymerformmasse liegt bevorzugt in Granulatform (Extudat, Compound) vor. Das Granulat hat bevorzugt Zylinderform mit kreisförmiger, elliptischer oder unregelmäßiger Grundfläche, Kugelform, Kissenform, Würfelform, Quaderform, Prismenform.

Das Längen-zu-Durchmesser-Verhältnis des Granulates beträgt 1 zu 50 bis 50 zu 1, bevorzugt 1 zu 5 bis 5 zu 1.

Das Granulat hat bevorzugt einen Durchmesser von 0,5 bis 15mm, besonders bevorzugt von 2 bis 3 mm und bevorzugt eine Länge von 0,5 bis 15mm, besonders bevorzugt von 2 bis 5 mm.

Bevorzugt beträgt die Restfeuchte der flammgeschützten Polymerformmasse 0,01 bis 10 Gew.-%, bevorzugt 0,1 bis 1 Gew.-%.

Von den flammgeschützten Polymerformmassen auf Basis von Polyamid sind Melt Volume Rates von 0 bis 15 bevorzugt, von 3 bis 12 besonders bevorzugt.

Überraschend wurde gefunden, dass die Restfeuchte innerhalb des bevorzugten Bereiches günstig für die Verträglichkeit des stabilisierten Flammschutzmittels mit dem Polymer ist. Restfeuchten über den bevorzugten Bereichen verringern die Verträglichkeit., d.h. erhöhen die Ausflussmenge, verringern die Ausflusszeit, verschlechtern die Melt Volume Rate der flammgeschützten Polymerformmassen, verschlechtern die mechanischen Festigkeitswerte der flammgeschützten Polymerformkörper. Tiefere Restfeuchten als die der vorgenannten sind technisch schwer zu realisieren.

Bei der Herstellung der flammgeschützten Polymerformmasse beträgt die bevorzugte Menge ausgeflossener flammgeschützter Polymerformmasse 0 bis 8 g/2 min.

Bei der Herstellung der flammgeschützten Polymerformmasse beträgt die bevorzugte Zeit bis zum Ausfluss der flammgeschützten Polymerformmasse 6 bis 5000 sec, bevorzugt 10 bis 1000 sec.

Die Erfindung betrifft auch ein Verfahren zur Herstellung von flammgeschützten Polymerformmassen, dadurch gekennzeichnet, dass die erfindungsgemäßen stabilisierten Flammschutzmittel mit dem Polymergranulat und evtl. Additiven in einem Compoundieraggregat bei höheren Temperaturen in der Polymerschmelze homogenisiert werden und anschließend der homogenisierte Polymerstrang abgezogen, gekühlt und portioniert wird.

Das erhaltene Granulat wird z.B. 10 h bei 90°C im Umluftofen getrocknet.

Bevorzugt entstammt das Compoundieraggregat aus der Gruppe der Einwellenextruder, Mehrzonenschnecken oder Doppelschneckenextruder.

Geeignete Compoundieraggregate sind Einwellenextruder bzw Einschneckenextruder z.B. der Fa. Berstorff GmbH, Hannover und oder der Fa. Leistritz, Nürnberg, =Mehrzonenschnecken-Extruder mit Dreizonenschnecken und/oder Kurzkompressionsschnecken, Ko-Kneter z.B. von Fa. Coperion Buss Compounding Systems, CH-Pratteln, z.B. MDK/E46-1 1 D und/oder Laborkneter (MDK 46 der Firma Buss, Schweiz mit L=11 D); Doppelschneckenextruder z.B. der Fa. Coperion Werner & Pfleiderer GmbH & Co.KG, Stuttgart (ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg; Ring-Extruder z.B. der Fa. 3+Extruder GmbH, Laufen mit einem Ring von drei bis zwölf kleinen Schnecken, die um einem statischen Kern rotieren und/oder Planetwalzenextruder z.B. der Fa. Entex, Bochum und/oder Entgasungs-Extruder und/oder Kaskadenextruder und/oder Maillefer-Schecken; Compounder mit gegenläufiger Doppelschnecke z.B. Compex 37- bzw. -70-Typen der Fa. Krauss-Maffei Berstorff.

Bevorzugt beträgt die wirksame Schneckenlängen (L) des Extruders (Compoundieraggregat) in Vielfachen des Schneckendurchmessers (D) 4 bis 200D, bevorzugt 10 bis 50D.

Die wirksamen Schneckenlängen (L) sind bei Einwellenextrudern bzw. Einschnecken-extrudern 20 bis 40D; bei Mehrzonenschneckenextudern sind z.B. 25D mit Einzugzone (L=10D), Übergangszone (L=6D), Ausstoßzone (L=9D); und bei Doppelschneckenextrudern sind 8 bis 48D.

Bevorzugt betragen die Verarbeitungstemperaturen bei Polystyrol 170 bis 200°C, Polypropylen 200 bis 300°C, Polyethylenterephthalat (PET) 250 bis 290°C, Polybutylenterephthalat (PBT)230 bis 270°C, Polyamid 6 (PA 6)260 bis 290°C, Polyamid 6.6 (PA 6.6)260 bis 290°C und bei Polycarbonat 280 bis 320°C.

Bevorzugt ist die Verwendung der erfindungsgemäßen flammgeschützten Polymerformmassen in flammgeschützten Polymer-Formkörpern.

Die erfindungsgemäßen flammgeschützten Polymerformmassen eignen sich zur Herstellung von Fasern, Folien und Formkörpern, insbesondere für Anwendungen im Elektro- und Elektronikbereich.

Die Erfindung betrifft auch flammgeschützte Polymer-Formkörper, -Filme, -Fäden und -Fasern enthaltend die erfindungsgemäßen stabilisierten Flammschutzmittel und/oder die erfindungsgemäßen flammgeschützten Polymerformmassen.

Bevorzugt enthalten die flammgeschützten Polymer-Formkörper, -Filme, -Fäden und -Fasern 1 bis 60 Gew.- % erfindungsgemäße stabilisierte Flammschutzmittel,
1 bis 99 Gew.-% Polymer oder Mischungen derselben
0,5 bis 60 Gew.-% Additive und
0,5 bis 60 Gew.-% Füllstoff und/oder Verstärkungsstoff.

Besonders bevorzugt enthalten die flammgeschützten Polymer-Formkörper, -Filme, Fäden und -Fasern
5 bis 40 Gew.-% erfindungsgemäße stabilisierte Flammschutzmittel,
5 bis 90 Gew.-% Polymer oder Mischungen derselben
5 bis 40 Gew.-% Additive und
5 bis 40 Gew.-% Füllstoff und/oder Verstärkungsstoff.

Die Erfindung betrifft auch flammgeschützte Polymer-Formkörper, -Filme, -Fäden und -Fasern enthaltend die erfindungsgemäßen flammgeschützten Polymerformmassen.

Bevorzugt enthalten dabei die flammgeschützten Polymer-Formkörper, -Filme, -Fäden und -Fasern 60 bis 98 Gew.-% flammgeschützte Polymerformmasse,
1 bis 40 Gew.-% Polymer oder Mischungen derselben.

Besonders bevorzugt enthalten dabei die flammgeschützten Polymer-Formkörper, -Filme, -Fäden und -Fasern 60 bis 98 Gew.-% flammgeschützte Polymerformmasse, 1 bis 40 Gew.-% Polymer oder Mischungen derselben
0,2 bis 40 Gew.-% Additive
0,2 bis 40 Gew.-% Füllstoff bzw. Verstärkungsmaterialien.

Überraschenderweise wurde gefunden, dass die erfindungsgemäßen flammgeschützten Polymer-Formkörper, -Filme, -Fäden und -Fasern durch das erfindungsgemäße stabilisierte Flammschutzmittel, das nach dem erfindungsgemäßen Verfahren stabilisierte Flammschutzmittel und/oder erfindungsgemäße flammgeschützte Polymerformmassen in ihren mechanischen (Festigkeits-)Werten (E-Modul, Zugfestigkeit, Reißdehnung, Schlagzähigkeit, Kerbschlagzähigkeit) verbessert werden.

Bei den vorgenannten flammgeschützten Polymer-Formkörpern, -Filmen, -Fäden und -Fasern beträgt die UL-94-Klassifizierung der Polymerformkörper V-1 oder V-0.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Bevorzugte Spritzgussmaschinen sind z.B. vom Typ Aarburg Allrounder.

Bevorzugt betragen bei diesen Verfahren die Verarbeitungstemperaturen bei Polystyrol 200 bis 250°C, bei Polypropylen 200 bis 300°C, bei Polyethylenterephthalat (PET) 250 bis 290°C, bei Polybutylenterephthalat (PBT) 230 bis 270°C, bei Polyamid 6 (PA 6) 260 bis 290°C, bei Polyamid 6.6 (PA 6.6) 260 bis 290°C, bei Polycarbonat 280 bis 320°C.

Überraschenderweise wurde gefunden, dass das erfindungsgemäße Verfahren zur Herstellung von flammgeschützten Polymer-Formkörpern durch das erfindungsgemäße stabilisierte Flammschutzmittel, das nach dem erfindungsgemäßen Verfahren stabilisierte Flammschutzmittel und/oder erfindungsgemäße flammgeschützte Polymerformmassen Verbesserungen durch niedrigere Ausflussmengen und höhere Ausflusszeiten erfährt.

Erfindungsgemäß bevorzugt ist die Anwendung der erfindungsgemäßen flammgeschützten Polymer-Formkörpern als Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

Weitere Anwendungsformen können je nach Beschaffenheit des zu bearbeitenden Prüfkörpers problemlos hergestellt werden.

Erfindungsgemäß einsetzbare Polymere sind duroplastische und thermoplastische Polymere.

Bevorzugt handelt es sich bei den Polymeren um Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/ Kohlenstoffmonoxid-Copolymere und deren Mischungen mit anderen Polymeren wie z.B. Polyamiden.

Bevorzugt handelt es sich bei den Polymeren um Kohlenwasserstoffharze (z.B. C₅-C₉) inklusive hydrierte Modifikationen davon (z.B. Klebrigmacherharze) und Mischungen von Polyalkylenen und Stärke.

Bevorzugt handelt es sich bei den Polymeren um Polystyrol (Polystyrol 143E (BASF), Poly-(p-methylstyrol), Poly-(alpha-methylstyrol).

Bevorzugt handelt es sich bei den Polymeren um Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z.B. Styrol auf Polybutadien, Styrol auf Polybutadien-Styrol-oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z.B. als sogenannte ABS-, MBS-, ASA- oder AES-Polymere bekannt sind.

Bevorzugt handelt es sich bei den Polymeren um halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo-und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z.B. AcrylnitrilButadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, ^{®}Nylon 4, Fa. DuPont), Polyamid 4/6 (Poly(tetramethylen-adipamid), Poly-(tetramethylen-adipinsäurediamid), ^{®}Nylon 4/6, Fa. DuPont), Polyamid 6 (Polycaprolactam, Poly-6-aminohexansäure, ^{®}Nylon. 6, Fa. DuPont, ^{®}Akulon K122, Fa. DSM; ^{®}Zytel 7301, Fa. DuPont; ^{®}Durethan B 29, Fa. Bayer), Polyamid 6/6 ((Poly(N,N'-hexamethyleneadipinediamid), ^{®}Nylon 6/6, Fa. DuPont, ^{®}Zytel 101, Fa. DuPont; ^{®}Durethan A30, ^{®}Durethan AKV, ^{®}Durethan AM, Fa. Bayer; ^{®}Ultramid A3, Fa BASF), Polyamid 6/9 (Poly(hexamethylen nonanediamid), ^{®}Nylon 6/9 , Fa. DuPont), Polyamid 6/10 (Poly(hexamethylen sebacamid), ^{®}Nylon 6/10 , Fa. DuPont), Polyamid 6/12 (Poly(hexamethylene dodecanediamid),^{®} Nylon 6/12, Fa. DuPont), Polyamid 6/66 (Poly(hexamethylene adipamide-co-caprolactam), ^{®}Nylon 6/66, Fa. DuPont), Polyamid 7 (Poly-7-aminoheptansäure, ^{®}Nylon 7, Fa. DuPont), Polyamid 7,7 (Polyheptamethylenpimelamid, ^{®}Nylon 7,7, Fa. DuPont), Polyamid 8 (Poly-8-aminooctansäure, ^{®}Nylon 8, Fa. DuPont), Polyamid 8,8 (Polyoctamethylensuberamid, ^{®}Nylon 8,8, Fa. DuPont), Polyamid 9 (Poly-9-aminononansäure, Nylon 9, Fa. DuPont), Polyamid 9,9 (Polynonamethylenazelamid, ^{™}Nylon 9,9, Fa. DuPont), Polyamid 10 (Poly-10-amino-decansäure, ^{®}Nylon 10, Fa. DuPont), Polyamid 10,9 (Poly(decamethylen-azelamid), ^{®}Nylon 10,9, Fa. DuPont), Polyamid 10,10 (Polydecamethylensebacamid, ^{®}Nylon 10,10, Fa. DuPont), Polyamid 11 (Poly-11-aminoundecansäure, ^{®}Nylon 11, Fa. DuPont), Polyamid 12 (Polylauryllactam, ^{®}Nylon 12 , Fa. DuPont, ^{®}Grillamid L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z.B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (^{®}Celanex 2500, ^{®}Celanex 2002, Fa Celanese; ^{®}Ultradur, FA. BASF), Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate.

Bevorzugt handelt es sich bei den Polymeren um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z.B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.

Bevorzugt handelt es sich bei den Polymeren um Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bestimmung der Menge an ausgeflossener flammgeschützter Polymerformmasse (Ausflussmenge):

An einer Spritzgussmaschine des Typs Aarburg Allrounder wird die nach 2 min aus der Spritzdüse ausgetretene Menge flammgeschützter Polymerformmasse abgenommen und ausgewogen.

Zeit bis zum Ausfließen der flammgeschützten Polymerformmasse (Ausflusszeit): An einer Spritzgussmaschine des Typs Aarburg Allrounder wird die Zeit bis zum Ausfließen von flammgeschützter Polymerformmasse gemessen.

### Bestimmung der Reservealkalität

Eine 0,02 %ige Suspension der Untersuchungssubstanz in Wasser wird bei Raumtemperatur 10 min gerührt und dann mit 0,1 N Salzsäure auf den pH-Wert 8,0 titriert. Der molare Verbrauch an Salzsäure wird zunächst in die äquivalente mol-Zahl NaOH (stellt die rechnerische Base dar) und dann in die entsprechende Masse NaOH 100 % umgerechnet. Die Masse NaOH wird prozentual auf die Einwaagemenge Untersuchungssubstanz bezogen. Der erhaltene Quotient ist die Reservealkalität.

Herstellung, Verarbeitung und Prüfung von flammgeschützten Polymerformmassen und Polymerformkörpern.

Die Flammschutzkomponenten [nicht definiert] wurden mit dem Polymergranulat und .. evtl. Additiven vermischt und auf einem Doppelschnecken-Extruder (Typ Leistritz LSM 30/34) bei Temperaturen von 230 bis 260°C (PBT-GV) bzw. von 260 bis 280°C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270°C (PBT-GV) bzw. von 260 bis 290°C (PA 66-GV) zu Prüfkörpern verarbeitet.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0: kein Nachbrennen länger als 1 0 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende
V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0
V-2: Zündung der Watte durch brennendes Abtropfen, übrige Kriterien wie bei V-1
nicht klassifizierbar (nkl) erfüllt nicht die Brandklasse V-2.

Die Erfindung wird durch die nachstehenden referenz Beispiele näher erläutert.

### Beispiele 1 bis 11: Bestimmung der Reservealkalinität

### Beispiel 1

Nach der Vorschrift "Bestimmung der Reservealkalität" wird die Reservealkalität von Magnesiumoxid bestimmt. Das Ergebnis ist in Tabelle 1 aufgeführt.

### Beispiel 2

Nach der Vorschrift "Bestimmung der Reservealkalität" wird die Reservealkalität von Magnesiumhydroxid bestimmt. Das Ergebnis ist in Tabelle 1 aufgeführt.

### Beispiel 3

Nach der Vorschrift "Bestimmung der Reservealkalität" wird die Reservealkalität von Magnesiumhydroxidcarbonat bestimmt. Das Ergebnis ist in Tabelle 1 aufgeführt.

### Beispiel 4

Nach der Vorschrift "Bestimmung der Reservealkalität" wird die Reservealkalität von Bariumoxid bestimmt. Das Ergebnis ist in Tabelle 1 aufgeführt.

### Beispiel 5

Nach der Vorschrift "Bestimmung der Reservealkalität" wird die Reservealkalität von .. Zinkoxid bestimmt. Das Ergebnis ist in Tabelle 1 aufgeführt.

### Beispiel 6

Nach der Vorschrift "Bestimmung der Reservealkalität" wird die Reservealkalität von Zinkhydroxidcarbonat bestimmt. Das Ergebnis ist in Tabelle 1 aufgeführt.

### Beispiel 7

Nach der Vorschrift "Bestimmung der Reservealkalität" wird die Reservealkalität von Zinkhydroxystannat bestimmt. Das Ergebnis ist in Tabelle 1 aufgeführt.

### Beispiel 8 (Vergleich)

Nach der Vorschrift "Bestimmung der Reservealkalität" wird die Reservealkalität von Zinkborat bestimmt. Es wird keine nennenswerte Reservealkalität gemessen. Das Ergebnis ist in Tabelle 1 aufgeführt.

### Beispiel 9 (Vergleich)

Nach der Vorschrift "Bestimmung der Reservealkalität" wird die Reservealkalität von Zinkphosphat bestimmt. Es wird keine nennenswerte Reservealkalität gemessen. Das Ergebnis ist in Tabelle 1 aufgeführt.

### Beispiel 10

Nach der Vorschrift "Bestimmung der Reservealkalität" wird die Reservealkalität von Aluminiumhydroxid bestimmt. Das Ergebnis ist in Tabelle 1 aufgeführt.

### Beispiel 11

Nach der Vorschrift "Bestimmung der Reservealkalität" wird die Reservealkalität von Kreide bestimmt. Das Ergebnis ist in Tabelle 1 aufgeführt.

### Beispiele 12 - 28: Herstellung von Flammschutzmitteln

### Beispiel 12 (Vergleich)

In einem Lödige-Mischer werden 5 kg eines Flammschutzmittels aus 95 Gew.-% Melaminpolyphosphat 1 und 5 Gew.-% Zinkborat hergestellt.

### Beispiel 13 (Vergleich)

In einem Lödige-Mischer werden 5 kg eines Flammschutzmittels aus 95 Gew.-% Melaminpolyphosphat 1 und 5 Gew.-% Zinkphosphat hergestellt.

### Beispiel 14

In einem Lödige-Mischer werden 5 kg eines Flammschutzmittels aus 98 Gew.-% Melaminpolyphosphat 1 und 2 Gew.-% Zinkoxid 1 hergestellt.

### Beispiel 15

In einem Lödige-Mischer werden 5 kg eines Flammschutzmittels aus 95Gew.-% Melaminpolyphosphat 1 und 5 Gew.-% Zinkoxid 2 hergestellt.

### Beispiel 16 (Vergleich)

In einem Lödige-Mischer werden 5 kg eines Flammschutzmittels aus 95 Gew.-% Melaminpolyphosphat 1 und 5 Gew.-% Zinkoxid 3 hergestellt.

### Beispiel 17 (Vergleich)

In einem Lödige-Mischer werden 5 kg eines Flammschutzmittels aus 95 Gew.-% Melaminpolyphosphat 1 und 5 Gew.-% Zinkoxid 4 hergestellt.

### Beispiel 18

In einem Lödige-Mischer werden 5 kg eines Flammschutzmittels aus 80 Gew.-% Melaminpolyphosphat 1 und 20 Gew.-% Zinkoxid 1 hergestellt.

### Beispiel 19

In einem Lödige-Mischer werden 5 kg eines Flammschutzmittels aus 95 Gew.-% Melaminpolyphosphat 1 und 5 Gew.-% Zinkhydroxidcarbonat hergestellt.

### Beispiel 20

In einem Lödige-Mischer werden 5 kg eines Flammschutzmittels aus 95 Gew.-% Melaminpolyphosphat 1 und 5 Gew.-% Zinkhydroxystannat hergestellt.

### Beispiel 21

In einem Lödige-Mischer werden 5 kg eines Flammschutzmittels aus 95 Gew.-% Melaminpolyphosphat 1 und 5 Gew.-% Magnesiumhydroxid hergestellt.

### Beispiel 22

In einem Lödige-Mischer werden 5 kg eines Flammschutzmittels aus 95 Gew.-% Melaminpolyphosphat 1 und 5 Gew.-% Aluminiumhydroxid hergestellt.

### Beispiel 23

In einem Lödige-Mischer werden 5 kg eines Flammschutzmittels aus 95 Gew.-% Melaminpolyphosphat 1 und 5 Gew.-% Kreide hergestellt.

### Beispiel 24 (Vergleich)

In einem Lödige-Mischer werden 5 kg eines Flammschutzmittels aus 33 Gew.-% Melaminpolyphosphat 1 und 67 Gew.-% Aluminiumdiethylphosphinat hergestellt.

### Beispiel 25

In einem Lödige-Mischer werden 5 kg eines Flammschutzmittels aus 33.Gew.-% Melaminpolyphosphat 1, 2 Gew.-% Zinkoxid und 65 Gew.-% Aluminiumdiethylphosphinat hergestellt.

### Beispiel 26

In einem Lödige-Mischer werden 5 kg eines Flammschutzmittels aus 32 Gew.-% Melaminpolyphosphat 1, 5 Gew.-% Zinkoxid und 63 Gew.-% Aluminiumdiethylphosphinat hergestellt.

### Beispiel 27

In einem Lödige-Mischer werden 5 kg eines Flammschutzmittels aus 30 Gew.-% Melaminpolyphosphat 1,10 Gew.-% Zinkoxid und 60 Gew.-% Aluminiumdiethylphosphinat hergestellt.

### Beispiel 28

In einem Lödige-Mischer werden 5 kg eines Flammschutzmittels aus 92 Gew.-% Melaminpolyphosphat 1, 5 Gew.-% Zinkoxid und 3 Gew.-% Bindemittel hergestellt.

### Beispiel 29 (Vergleich)

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6, 25 Gewichtsteile Melaminpolyphosphat 1 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Die nach Underwriter Laboratories UL-94 getesteten Prüfkörper erfüllen die Kategorie V-0.

Beispiele 30 bis 52: Herstellung, Verarbeitung und Prüfung von flammgeschützten Polymerformmassen und flammgeschützten Polymerformkörpern

### Beispiel 30 (Vergleich)

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6, 25 Gewichtsteile Flammschutzmittel nach Beispiel 12 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Die nach Underwriter Laboratories UL-94 getesteten Prüfkörper erfüllen die Kategorie V-0.

### Beispiel 31 (Vergleich)

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6, 25 Gewichtsteile Flammschutzmittel nach Beispiel 13 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Die nach Underwriter Laboratories UL-94 getesteten Prüfkörper erfüllen die Kategorie V-0.

### Beispiel 32

Nach der allgemeinen Vorschrift "Herstellung, Verarbeitung und Prüfung von flammgeschützten Polymerformmassen und flammgeschützten Polymerformkörpern" werden 55 Gewichtsteile Polyamid 6, 15 Gewichtsteile stabilisiertes Flammschutzmittel nach Beispiel 14 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von .. erfindungsgemäßem stabilisiertem Flammschutzmittel wesentlich besser als bei den Vergleichsbeispielen 29, 30 und 31. Die nach Underwriter Laboratories UL-94 getesten Prüfkörper erfüllen die Kategorie V-1.

### Beispiel 33

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6, 25 Gewichtsteile stabilisiertes Flammschutzmittel nach Beispiel 15 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei den Vergleichsbeispielen 29, 30 und 31. Die nach Underwriter Laboratories UL-94 getesten Prüfkörper erfüllen die Kategorie V-0.

### Beispiel 34 (Vergleich)

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6, 25 Gewichtsteile stabilisiertes Flammschutzmittel nach Beispiel 16 und 30 Gewichtsteile Glasfasern 1 zu einer Formmasse verarbeitet. Die Formmasse wird weiter zu flämmgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind schlechter als bei dem erfindungsgemäßen Beispiel 33. Die nach Underwriter Laboratories UL-94 getesteten Prüfkörper erfüllen die Kategorie V-0.

### Beispiel 35 (Vergleich)

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6, 25 Gewichtsteile stabilisiertes Flammschutzmittel nach Beispiel 17 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind schlechter als bei dem erfindungsgemäßen Beispiel 33. Die nach Underwriter Laboratories UL-94 getesteten Prüfkörper erfüllen die Kategorie V-0.

### Beispiel 36

Nach der allgemeinen Vorschrift "Herstellung, Verarbeitung und Prüfung von flammgeschützten Polymerformmassen und flammgeschützten Polymerformkörpern" werden 35 Gewichtsteile Polyamid 6, 35 Gewichtsteile stabilisiertes Flammschutzmittel nach Beispiel 18 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei den Vergleichsbeispielen 29, 30 und 31. Die nach Underwriter Laboratories UL-94 getesteten Prüfkörper erfüllen die Kategorie V-0.

### Beispiel.37

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6, 25 Gewichtsteile stabilisiertes Flammschutzmittel nach Beispiel 19 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei den Vergleichsbeispielen 29, 30 und 31. Die nach Underwriter Laboratories UL-94 getesteten Prüfkörper erfüllen die Kategorie V-0.

### Beispiel 38

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6, 25 Gewichtsteile stabilisiertes Flammschutzmittel nach Beispiel 20 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei den Vergleichsbeispielen 29, 30 und 31. Die nach Underwriter Laboratories UL-94 getesteten Prüfkörper erfüllen die Kategorie V-0.

### Beispiel 39

Nach der allgemeinen Vorschrift "Herstellung, Verarbeitung und Prüfung von flammgeschützten Polymerformmassen und flammgeschützten Pblymerfomikörpern" werden 45 Gewichtsteile Polyamid 6, 25 Gewichtsteile stabilisiertes Flammschutzmittel nach Beispiel 21 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei den Vergleichsbeispielen 29, 30 und 31. Die nach Underwriter Laboratories UL-94 getesteten Prüfkörper erfüllen die Kategorie V-0.

### Beispiel 40

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6, 25 Gewichtsteile Flammschutzmittel nach Beispiel 22 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei den Vergleichsbeispielen 29, 30 und 31. Die nach Underwriter Laboratories UL-94 getesteten Prüfkörper erfüllen die Kategorie V-0.

### Beispiel 41

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6, 25 Gewichtsteile stabilisiertes Flammschutzmittel nach Beispiel 23 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei den Vergleichsbeispielen 29, 30 und 31. Die nach Underwriter Laboratories UL-94 getesteten Prüfkörper erfüllen die Kategorie V-0.

### Beispiel 42 (Vergleich)

Nach der allgemeinen Vorschrift "Herstellung, Verarbeitung und Prüfung von flammgeschützten Polymerformmassen und flammgeschützten Polymerformkörpern" werden 50 Gewichtsteile Polyamid 6, 20 Gewichtsteile stabilisiertes Flammschutzmittel nach Beispiel 24 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Die nach Underwriter Laboratories UL-94 getesteten Prüfkörper erfüllen die Kategorie V-0.

### Beispiel 43

Nach der allgemeinen Vorschrift "Herstellung, Verarbeitung und Prüfung von flammgeschützten Polymerformmassen und flammgeschützten Polymerformkörpern" werden 55 Gewichtsteile Polyamid 6, 15 Gewichtsteile Flammschutzmittel nach Beispiel 25 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei dem Vergleichsbeispiel 42. Die nach Underwriter Laboratories UL-94 getesteten Prüfkörper erfüllen die Kategorie V-1.

### Beispiel 44

Nach der allgemeinen Vorschrift "Herstellung, Verarbeitung und Prüfung von flammgeschützten Polymerformmassen und flammgeschützten Polymerformkörpern" werden 50 Gewichtsteile Polyamid 6, 20 Gewichtsteile Flammschutzmittel nach Beispiel 26 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei dem Vergleichsbeispiel 42. Die nach Underwriter Laboratories UL-94 getesteten Prüfkörper erfüllen die Kategorie V-0.

### Beispiel 45

Nach der allgemeinen Vorschrift "Herstellung, Verarbeitung und Prüfung von flammgeschützten Polymerformmassen und flammgeschützten Polymerformkörpern" werden 40 Gewichtsteile Polyamid 6, 30 Gewichtsteile stabilisiertes Flammschutzmittel nach Beispiel 27 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei dem Vergleichsbeispiel 42. Die nach Underwriter Laboratories UL-94 getesteten Prüfkörper erfüllen die Kategorie V-0.

### Beispiel 46

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6, 25 Gewichtsteile stabilisiertes Flammschutzmittel nach Beispiel 28 und 30 Gewichtsteile Glasfasern 1 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei dem Vergleichsbeispiel 42. Die nach Underwriter Laboratories UL-94 getesteten Prüfkörper erfüllen die Kategorie V-0.

### Beispiel 47 (Vergleich)

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6.6, 25 Gewichtsteile Melaminpolyphosphat 1 und 30 Gewichtsteile Glasfasern 2 zu einer Formmasse verarbeitet. Die Formmasse wird weiter zu flammgeschützten Polymerformkörpern (UL-94-Prüfkörper) verarbeitet.

Dabei werden Ausflussmenge und Ausflusszeit der flammgeschützten Polymerformmasse bestimmt. Die Ergebnisse sind in Tabelle 3 aufgeführt. Die nach Underwriter Laboratories UL-94 getesteten Prüfkörper erfüllen die Kategorie V-0.

### Beispiel 48 (Vergleich)

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6.6, 25 Gewichtsteile stabilisiertes Flammschutzmittel nach Beispiel 12 und 30 Gewichtsteile Glasfasern 2 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Die nach Underwriter Laboratories UL-94 getesteten Prüfkörper erfüllen die Kategorie V-0.

### Beispiel 49

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6.6, 25 Gewichtsteile stabilisiertes Flammschutzmittel nach Beispiel 15 und 30 Gewichtsteile Glasfasern 2 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei den Vergleichsbeispielen 47 und 48. Die nach Underwriter Laboratories UL-94 getesteten Prüfkörper erfüllen die Kategorie V-0.

### Beispiel 50

Nach der allgemeinen Vorschrift "Herstellung, Verarbeitung und Prüfung von flammgeschützten Polymerformmassen und flammgeschützten Polymerformkörpern" werden 45 Gewichtsteile Polyamid 6.6, 25 Gewichtsteitestabitisiertes Flammschutzmittel nach Beispiel 19 und 30 Gewichtsteile Glasfasern 2 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei den Vergleichsbeispielen 47 und 48. Die nach Underwriter Laboratories UL-94 getesteten Prüfkörper erfüllen die Kategorie V-0.

### Beispiel 51 (Vergleich)

Nach der allgemeinen Vorschrift "Herstellung, Verarbeitung und Prüfung von flammgeschützten Polymerformmassen und flammgeschützten Polymerformkörpern" werden 50 Gewichtsteile Polyamid 6.6, 20 Gewichtsteile Flammschutzmittel nach Beispiel 24 und 30 Gewichtsteile Glasfasern 2 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Die nach Underwriter Laboratories UL-94 getesteten Prüfkörper erfüllen die Kategorie V-0.

### Beispiel 52

Nach der allgemeinen Vorschrift "Herstellung, Verarbeitung und Prüfung von flammgeschützten Polymerformmassen und flammgeschützten Polymerformkörpern" werden 50 Gewichtsteile Polyamid 6.6, 20 Gewichtsteile stabilisiertes Flammschutzmittel nach Beispiel 26 und 30 Gewichtsteile Glasfasern 2 zu einer Formmasse verarbeitet. Die Formmasse wird weiter zu flammgeschützten Polymerformkörpern (UL-94-Prüfkörper) verarbeitet. Dabei werden Ausflussmenge und Ausflusszeit der flammgeschützten Polymerformmasse bestimmt. Die Ergebnisse sind in Tabelle 3 aufgeführt. Sie sind durch die Verwendung von erfindungsgemäßem stabilisiertem Flammschutzmittel wesentlich besser als bei dem Vergleichsbeispiel 51. Die nach Underwriter Laboratories UL-94 getesteten Prüfkörper erfüllen die Kategorie V-0.

Beispiele 32, 33, 36 bis 41 (hergestellt aus erfindungsgemäßen stabilisierten Flammschutzmitteln der Beispiele 14, 15, 18 bis 23) zeigen den überraschenden Stabilisierungseffekt des Additives mit Reservealkalität auf flammgeschützte Formmassen aus Polyamid 6 gegenüber den Vergleichsbeispielen 29 (ohne Zusatz), 30 (Zinkborat-Basis; Flammschutzmittel aus Vergleichsbeispiel 12) und 31 (Zinkphosphat-Basis; Flammschutzmittel aus Vergleichsbeispiel 13).

Beispiele 32 und 33 (hergestellt aus erfindungsgemäßen stabilisierten Flammschutzmitteln der Beispiele 14 und 15) zeigen den günstigen Stabilisierungseffekt der erfindungsgemäßen Teilchengröße d90 des Additives mit Reservealkalität auf die flammgeschützten Formmassen aus Polyamid 6. Als Vergleich dienen die Beispiele 34 und 35 (hergestellt aus Flammschutzmitteln der Vergleichsbeispiele 16 und 17) mit nicht erfindungsgemäßer Teilchengröße. Beispiele 43 bis 45 (hergestellt aus erfindungsgemäßen stabilisierten Flammschutzmitteln der Beispiele 25 bis 27) zeigen den überraschenden Stabilisierungseffekt des Additives mit Reservealkalität auf Aluminiumdiethylphosphinathaltige flammgeschützte Formmassen aus Polyamid 6 gegenüber dem Vergleichsbeispiel 42 (hergestellt aus Flammschutzmittel des Vergleichsbeispiels 24; ohne Zusatz).

### Beispiel 46 (hergestellt aus erfindungsgemäßem stabilisiertem

Flammschutzmittelgranulat des Beispieles 28) zeigt den überraschenden Stabilisierungseffekt des Additives mit Reservealkalität auf flammgeschützte Formmassen aus Polyamid 6.

Beispiele 49 und 50 (hergestellt aus erfindungsgemäßen stabilisierten Flammschutzmitteln der Beispiele 15 und 19) zeigen den überraschenden Stabilisierungseffekt des Additives mit Reservealkalität auf flammgeschützte Formmassen aus Polyamid 6.6 gegenüber den Vergleichsbeispielen 47 und 48 (hergestellt ohne Zusatz bzw. aus Flammschutzmitteln des Vergleichsbeispiels 12 auf Zinkboratbasis).

Beispiel 52 (hergestellt aus erfindungsgemäßem stabilisierten Flammschutzmittel des Beispiels 26) zeigen den überraschenden Stabilisierungseffekt des Additives mit Reservealkalität auf Aluminiumdiethylphosphinathaltige flammgeschützte Formmassen aus Polyamid 6.6 gegenüber dem Vergleichsbeispiel 51 (hergestellt aus Flammschutzmitteln des Vergleichsbeispiels 24 ohne Zusatz).

### Verwendete Chemikalien

| | |
|---|---|
| Magnesiumoxid | Magnesiumoxid MgO, Fa. Riedel de Haen |
| Magnesiumhydroxid | Magnesiumhydroxid Mg(OH)2 reinst, Fa. Merck, d90 = ca. 5 µm |
| Magnesiumhydroxidcarbonat | Magnesiumhydroxidcarbonat, Fa. Merck |
| Bariumoxid | Bariumoxid, Fa. Alfa Aesar |
| Zinkoxid 1 | Zinkoxid AA, Fa. Omya, d90 = ca. 1,4 µm |
| Zinkoxid 2 | Zinkoxid Fa. Alfa Aesar, d90 = ca. 45 µm |
| Zinkoxid 3 | Zinkoxid Fa. Alfa Aesar, d90 = ca. 0,071 µm |
| Zinkoxid 4 | Zinkoxid Fa. Alfa Aesar, d90 = ca. 76 µm |
| Zinkhydroxidcarbonat | Zinkhydroxidcarbonat, Fa. Riedel de Haen |
| Zinkborat | ^{®}Firebrake 500, Fa. Borax |
| Zinkhydroxystannat | ^{®}Flamtard H, Fa. Blythe, d90 = ca. 10 µm |
| Zinkphosphat | Zinkphosphat, Fa. Alfa Aesar . |
| Aluminiumhydroxid | Aluminiumhydroxid Al(OH)3, Fa. Martinswerk |
| Kreide | ^{®}Ornyalyte, Fa: Omya |
| Aluminiumdiethylphosphinat | ^{®}Exolit OP 1230, Fa. Clariant, Restfeuchte <0,3% |
| Polyamid 6.6 | ^{®}Ultramid A3, Fa. BASF |
| Polyamid 6 | ^{®}Zytel 7301, Fa. Du Pont |
| Glasfasern 1 | ^{®}etrotex EC 10 983, Fa. Saint-Gobain |
| Glasfasern 2 | PPG 3540, Fa. PPG Industries, Inc. |
| Melaminpolyphosphat 1 | ^{®}Melapur 200/70, Fa. Ciba SC; Zusammensetzung: Orthophosphat 1 ,4 Mol-%, Pyrophosphat 1,2 Mol-%, Polyphosphat 97 Mol-%, Kondensationsgrad n 108, Restfeuchte 0,18 Gew.%, Melamingehalt 1, 18 mol je mol Phosphor, pH-Wert (10 Gew.-% wässriger Slurry) 5,1, d50 < 10 µm, Restfeuchte < 0,2% |
| Bindemittel | ^{®}Mowiol 3-86, Fa. Kuraray |

**Tabelle 1**

| Beispiel | Additiv mit Reservealkalität | Reservealkalität % |
|---|---|---|
| 1 | Magnesiumoxid | 163,2 |
| 2 | Magnesiumhydroxid | 36,0 |
| 3 | Magnesiumhydroxidcarbonat | 44,5 |
| 4 | Bariumoxid | 52,0 |
| 5 | Zinkoxid 1 | 1,3 |
| 6 | Zinkhydroxidcarbonat | 1,7 |
| 7 | Zinkhydroxystannat | 2,5 |
| 8 (Vgl.) | Zinkborat | 0,0 |
| 9 (Vgl.) | Zinkphosphat | 0,0 |
| 10 | Aluminiumhydroxid | 3,9 |
| 11 | Kreide | 2,3 |

**Tabelle 2: Zusammensetzung der Flammschutzmittel**

| Beispiel | 12 | (Vgl) | 13 (Vgl) | 14 | 15 | 16 (Vgl) | 17 (Vgl) | 18 | 19 | 20 | 21 | 22 | 23 | 24 (Vgl) | 25 | 26 | 27 | 28 |
|---|---|---|---|---|---|---|---|---|---|---|---|---|---|---|---|---|---|---|
| Melaminpolyphosphat 1 | Gew.-% | 95 | 95 | 98 | 95 | 95 | 95 | 80 | 95 | 95 | 95 | 95 | 95 | 33 | 33 | 32 | 30 | 92 |
| Zinkborat | Gew.-% | 5 | | | | | | | | | | | | | | | | |
| Zinkphosphat | Gew.-% | | 5 | | | | | | | | | | | | | | | |
| Zinkoxid 1 | Gew.-% | | | 2 | 5 | | | 20 | | | | | | 0 | 2 | 5 | 10 | 5 |
| Zinkoxid 2 | Gew.-% | | | | | 5 | | | | | | | | | | | | |
| Zinkoxid 3 | Gew.-% | | | | | | 5 | | | | | | | | | | | |
| Zinkhydroxidcarbonat | Gew.-% | | | | | | | | 5 | | | | | | | | | |
| Zinkhydroxystannat | Gew.-% | | | | | | | | | 5 | | | | | | | | |
| Magnesiumhydroxid | Gew.-% | | | | | | | | | | 5 | | | | | | | |
| Aluminiumhydroxid | Gew.-% | | | | | | | | | | | 5 | | | | | | |
| Kreide | Gew.-% | | | | | | | | | | | | 5 | | | | | |
| Aluminiumdiethylphosphinat | Gew.-% | | | | | | | | | | | | | 67 | 65 | 63 | 60 | |
| Granulierhilfsmittel | Gew.-% | | | | | | | | | | | | | | | | | 3 |

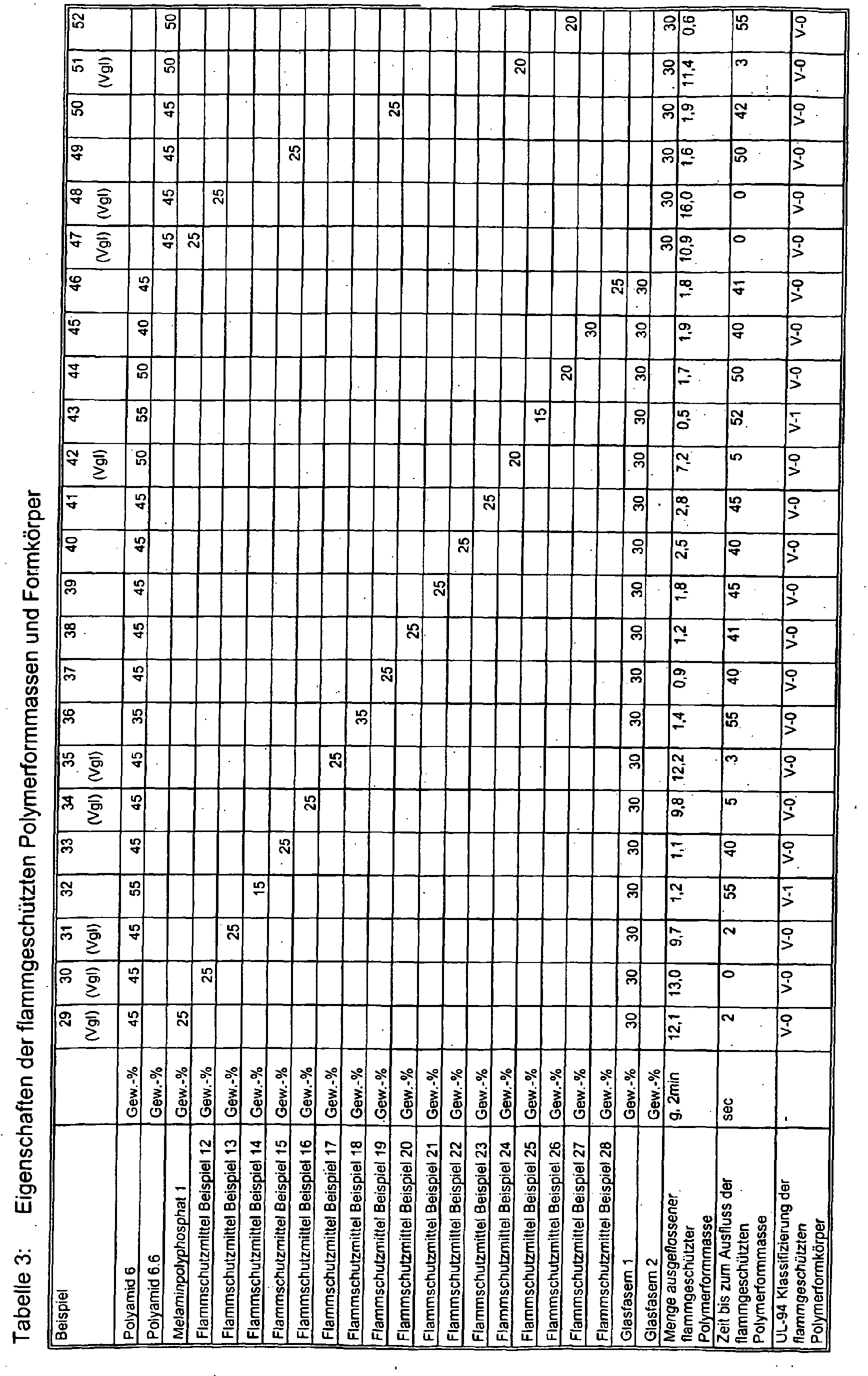

## Patentansprüche

1. Stabilisiertes Flammschutzmittel, enthaltend
a) 98 bis 75 Gew.-% Melaminpolyphosphat
b) 2 bis 25 Gew.-% Additiv mit Reservealkalität, wobei es sich dabei um Borphosphat, Calciumpyrophosphat, Calciumborat, Magnesiumpyrophosphat, Magnesiumborat, Zinkstearat und/oder Zinkpyrophosphat handelt und die Reservealkalität des Additivs mit Reservealkalität 0,5 bis 60 Gew.-% beträgt, und wobei unter Reservealkalinität der prozentuale NaOH-Gehalt einer Untersuchungssubstanz verstanden wird, der äquivalent zum Verbrauch an 0,1 N Salzsäure bei Titration der Untersuchungssubstanz in 0,02 %iger wässriger Suspension auf den pH-Wert 8,0 ist, nachdem zuvor bei Raumtemperatur 10 Minuten gerührt wurde.

2. Stabilisiertes Flammschutzmittel nach Anspruch 1, **dadurch gekennzeichnet, dass** es weiterhin eine Phosphinsäure und/oder ein Phosphinsäuresalz enthält.

3. Stabilisiertes Flammschutzmittel nach Anspruch 2, enthaltend
a) 74 bis 25 Gew.-% Melaminpolyphosphat
b) 1 bis 10 Gew.-% Additiv mit Reservealkalität
c) 25 bis 74 Gew.-% Phosphinsäure/-salz ausgewählt aus der Gruppe Aluminiumtrisdiethylphosphinat, Aluminiumtrismethylethylphosphinat, Titanylbisdiethylphosphinat, Titantetrakisdiethyl-phosphinat, Titanylbismethylethylphosphinat, Titantetrakismethylethylphosphinat, Zinkbisdiethylphosphinat, Zinkbismethylethylphosphinat und Mischungen davon.

4. Stabilisiertes Flammschutzmittel nach mindestens einem der Ansprüche 1 bis 3, **dadurch gekennzeichnet, dass** der Melamingehalt der Melaminpolyphosphate 0,9 bis 2,0 mol je mol Phosphor ist.

5. Stabilisiertes Flammschutzmittel nach mindestens einem der Ansprüche 1 bis 4, **dadurch gekennzeichnet, dass** der Kondensationsgrad n der Melaminpolyphosphate 7 bis 200 beträgt, bevorzugt 15 bis 150.

6. Stabilisiertes Flammschutzmittel nach mindestens einem der Ansprüche 1 bis 5, **dadurch gekennzeichnet, dass** der pH-Wert einer Aufschlämmung von 10 Gew.-% in Wasser bevorzugt größer oder gleich 5 ist.

7. Stabilisiertes Flammschutzmittel nach mindestens einem der Ansprüche 1 bis 6, **dadurch gekennzeichnet, dass** die Teilchengröße (d₉₀) des Additivs mit Reservealkalität 0,01 bis 500 µm beträgt, bevorzugt 1 bis 50 µm.

8. Stabilisiertes Flammschutzmittel nach mindestens einem der Ansprüche 1 bis 7, **dadurch gekennzeichnet, dass** es weiterhin einen Binder enthält.

9. Stabilisiertes Flammschutzmittel nach Anspruch 8, **dadurch gekennzeichnet, dass** es in Granulatform vorliegt.

10. Stabilisiertes Flammschutzmittel nach Anspruch 9 in Granulatform, enthaltend
a) 98,9 bis 70 Gew.-% Melaminpolyphosphat
b) 1 bis 30 Gew.-% Additiv mit Reservealkalität
c) 0,1 bis 10 Gew.-% Bindemittel.

11. Flammgeschützte Polymerformmassen, **dadurch gekennzeichnet, dass** sie 1 bis 60 Gew.-% stabilisiertes Flammschutzmittel nach mindestens einem der Ansprüche 1 bis 10, 1 bis 98,5 Gew.-% Polymer oder Mischungen derselben, 0,5 bis 60 Gew.-% Additive enthalten.

12. Flammgeschützte Polymer-Formkörper, -Filme, -Fäden und -Fasern, **dadurch gekennzeichnet, dass** sie stabilisierte Flammschutzmittel nach mindestens einem der Ansprüche 1 bis 10 enthalten.

13. Flammgeschützte Polymer-Formkörper, -Filme, -Fäden und -Fasern nach Anspruch 12, **dadurch gekennzeichnet, dass** sie 1 bis 60 Gew.- % stabilisierte Flammschutzmittel nach mindestens einem der Ansprüche 1 bis 10, 1 bis 98,5 Gew.-% Polymer oder Mischungen derselben, 0,5 bis 60 Gew.-% Additive enthalten.

14. Flammgeschützte Polymer-Formkörper, -Filme, -Fäden und -Fasern, **dadurch gekennzeichnet, dass** sie 60 bis 99 Gew.-% flammgeschützte Polymerformmasse nach Anspruch 11, 1 bis 40 Gew.-% Polymer oder Mischungen derselben enthalten.

## Claims

1. A stabilized flame retardant, comprising
a) from 98 to 75% by weight of melamine polyphosphate
b) from 2 to 25% by weight of additive with latent alkalinity,
where this is boron phosphate, calcium pyrophosphate, calcium borate, magnesium pyrophosphate, magnesium borate, zinc stearate, and/or zinc pyrophosphate, and the latent alkalinity of the additive with latent alkalinity is from 0.5 to 60% by weight, and where latent alkalinity means the percentage NaOH content of a substance under consideration, where this content is equivalent to the amount of 0.1 N hydrochloric acid required for titration of the substance under consideration in 0.02% strength aqueous suspension to pH 8.0 after 10 min of prior stirring at room temperature.

2. The stabilized flame retardant as claimed in claim 1, which also comprises a phosphinic acid and/or comprises a phosphinic salt.

3. The stabilized flame retardant as claimed in claim 2, comprising
a) from 74 to 25% by weight of melamine polyphosphate
b) from 1 to 10% by weight of additive with latent alkalinity
c) from 25 to 74% by weight of phosphinic acid/salt selected from the group of aluminum trisdiethylphosphinate, aluminum trismethylethylphosphinate, titanyl bisdiethylphosphinate, titanium tetrakisdiethylphosphinate, titanyl bismethylethylphosphinate, titanium tetrakismethylethylphosphinate, zinc bisdiethylphosphinate, zinc bismethylethylphosphinate and mixtures thereof.

4. The stabilized flame retardant as claimed in at least one of claims 1 to 3, wherein the melamine content of the melamine polyphosphates is from 0.9 to 2.0 mol per mole of phosphorus.

5. The stabilized flame retardant as claimed in at least one of claims 1 to 4, wherein the degree of condensation n of the melamine polyphosphates is from 7 to 200, preferably from 15 to 150.

6. The stabilized flame retardant as claimed in at least one of claims 1 to 5, wherein the pH of a slurry of 10% by weight in water is preferably greater than or equal to 5.

7. The stabilized flame retardant as claimed in at least one of claims 1 to 6, wherein the particle size (d₉₀) of the additive with latent alkalinity is from 0.01 to 500 µm, preferably from 1 to 50 µm.

8. The stabilized flame retardant as claimed in at least one of claims 1 to 7, which also comprises a binder.

9. The stabilized flame retardant as claimed in claim 8, which is a granulated material.

10. The stabilized flame retardant as claimed in claim 9, which is a granulated material, comprising
a) from 98.9 to 70% by weight of melamine polyphosphate
b) from 1 to 30% by weight of additive with latent alkalinity
c) from 0.1 to 10% by weight of binder.

11. The flame-retardant polymer molding composition, which comprises from 1 to 60% by weight of stabilized flame retardant as claimed in at least one of claims 1 to 10, from 1 to 98.5% by weight of polymer or a mixture of these, from 0.5 to 60% by weight of additives.

12. A flame-retardant polymer molding, flame-retardant polymer film, flame-retardant polymer filament, or flame-retardant polymer fiber, which comprises stabilized flame retardants as claimed in at least one of claims 1 to 10.

13. The flame-retardant polymer molding, flame-retardant polymer film, flame-retardant polymer filament, or flame-retardant polymer fiber, as claimed in claim 12, which comprises
from 1 to 60% by weight of stabilized flame retardant as claimed in at least one of claims 1 to 10, from 1 to 98.5% by weight of polymer or a mixture of these,
from 0.5 to 60% by weight of additives.

14. The flame-retardant polymer molding, flame-retardant polymer film, flame-retardant polymer filament, or flame-retardant polymer fiber, which comprises from 60 to 99% by weight of flame-retardant polymer molding composition as claimed in claim 11,
from 1 to 40% by weight of polymer or a mixture of these.

## Revendications

1. Agent ignifuge stabilisé, contenant
a) 98 à 75 % en poids de polyphosphate de mélamine,
b) 2 à 25 % en poids d'un additif présentant une réserve d'alcalinité, celui-ci étant le phosphate de bore, le pyrophosphate de calcium, le borate de calcium, le pyrophosphate de magnésium, le borate de magnésium, le stéarate de zinc et/ou le pyrophosphate de zinc, et la réserve d'alcalinité de l'additif présentant une réserve d'alcalinité étant de 0,5 à 60 % en poids, la réserve d'alcalinité désignant la teneur en NaOH en pourcentage d'une substance étudiée qui est équivalente à la consommation d'acide chlorhydrique à 0,1 N lors du titrage de la substance étudiée dans une suspension aqueuse à 0,02 % au pH 8,0, après agitation préalable à température ambiante pendant 10 minutes.

2. Agent ignifuge stabilisé selon la revendication 1, **caractérisé en ce qu'**il contient également un acide phosphinique et/ou un sel d'un acide phosphinique.

3. Agent ignifuge stabilisé selon la revendication 2, contenant
a) 74 à 25 % en poids de polyphosphate de mélamine,
b) 1 à 10 % en poids d'un additif présentant une réserve d'alcalinité,
c) 25 à 74 % en poids d'un acide phosphinique/sel d'un acide phosphinique choisi dans le groupe constitué par le phosphinate de trisdiéthyle d'aluminium, le phosphinate de trisméthyléthyle d'aluminium, le phosphinate de titanylbisdiéthyle, le phosphinate de tétrakisdiéthyle de titane, le phosphinate de titanylbisméthyléthyle, le phosphinate de tétrakisméthyléthyle de titane, le phosphinate de bisdiéthyle de zinc, le phosphinate de bisméthyléthyle de zinc, et leurs mélanges.

4. Agent ignifuge stabilisé selon au moins l'une quelconque des revendications 1 à 3, **caractérisé en ce que** la teneur en mélamine des polyphosphates de mélamine est de 0,9 à 2,0 mole par mole de phosphore.

5. Agent ignifuge stabilisé selon au moins l'une quelconque des revendications 1 à 4, **caractérisé en ce que** le degré de condensation n des polyphosphates de mélamine est de 7 à 200, de préférence de 15 à 150.

6. Agent ignifuge stabilisé selon au moins l'une quelconque des revendications 1 à 5, **caractérisé en ce que** le pH d'une suspension à 10 % en poids dans de l'eau est de préférence supérieur ou égal à 5.

7. Agent ignifuge stabilisé selon au moins l'une quelconque des revendications 1 à 6, **caractérisé en ce que** la taille de particule (d₉₀) de l'additif présentant une réserve d'alcalinité est de 0,01 à 500 µm, de préférence de 1 à 50 µm.

8. Agent ignifuge stabilisé selon au moins l'une quelconque des revendications 1 à 7, **caractérisé en ce qu'**il contient également un liant.

9. Agent ignifuge stabilisé selon la revendication 8, **caractérisé en ce qu'**il se présente sous forme granulaire.

10. Agent ignifuge stabilisé selon la revendication 9 sous forme granulaire, contenant
a) 98,9 à 70 % en poids de polyphosphate de mélamine,
b) 1 à 30 % en poids d'un additif présentant une réserve d'alcalinité,
c) 0,1 à 10 % en poids d'un liant.

11. Matériaux de moulage polymères ignifugés, **caractérisés en ce qu'**ils contiennent 1 à 60 % en poids d'un agent ignifuge stabilisé selon au moins l'une quelconque des revendications 1 à 10, 1 à 98,5 % en poids d'un polymère ou de mélanges de celui-ci, 0,5 à 60 % en poids d'additifs.

12. Corps moulés, films, fils et fibres polymères ignifugés, **caractérisés en ce qu'**ils contiennent des agents ignifuges stabilisés selon au moins l'une quelconque des revendications 1 à 10.

13. Corps moulés, films, fils et fibres polymères ignifugés selon la revendication 12, **caractérisés en ce qu'**ils contiennent 1 à 60 % en poids d'agents ignifuges stabilisés selon au moins l'une quelconque des revendications 1 à 10, 1 à 98,5 % en poids d'un polymère ou de mélanges de celui-ci, 0,5 à 60 % en poids d'additifs.

14. Corps moulés, films, fils et fibres polymères ignifugés, **caractérisés en ce qu'**ils contiennent 60 à 99 % en poids d'un matériau de moulage polymère ignifugé selon la revendication 11, 1 à 40 % en poids d'un polymère ou de mélanges de celui-ci.
